# EUROPÄISCHE PATENTSCHRIFT

(11) **EP 4 304 955 B1**
(45) Veröffentlichungstag und Bekanntmachung des Hinweises auf die Patenterteilung: **29.10.2025**
(21) Anmeldenummer: 22711054.1
(22) Anmeldetag: 08.03.2022
(51) Int. Cl.: B65G 1/04, B65G 1/137

(54) **SYSTEM, VERFAHREN UND VERWENDUNG ZUR KOMMISSIONIERUNG VON GEGENSTÄNDEN FÜR DIE BRILLENHERSTELLUNG**
SYSTEM, METHOD AND USE FOR PICKING OBJECTS FOR EYEGLASS MANUFACTURING
SYSTÈME, PROCÉDÉ ET UTILISATION POUR LA PRÉPARATION DE COMMANDES D'OBJETS DESTINÉS À LA FABRICATION DE LUNETTES

(30) Priorität: 08.03.2021 DE 102021001209; 09.03.2021 DE 102021001248
(43) Veröffentlichungstag der Anmeldung: 17.01.2024
(73) Patentinhaber: Schneider GmbH & Co. KG, 35112 Fronhausen (DE)
(72) Erfinder: GERRATH, Torsten, 35037 Marburg (DE); BUCHENAUER, Helwig, 35232 Dautphetal-Buchenau (DE); SCHNEIDER, Gunter, 35037 Marburg (DE)
(74) Vertreter: Von Rohr Patentanwälte Partnerschaft mbB
(86) Internationale Anmeldenummer: PCT/EP2022/055854
(87) Internationale Veröffentlichungsnummer: WO 2022/189414

(56) Entgegenhaltungen:
- WO-A1-2011/151275
- WO-A2-2004/014765
- US-A1- 2020 324 974

## Beschreibung

Die vorliegende Erfindung betrifft ein System zum Transport und zur Lagerung von, insbesondere optischen, Gegenständen nach dem Oberbegriff des Patentanspruchs 1, ein Verfahren zur Ausgabe bzw. Kommissionierung von gelagerten Gegenständen nach dem Oberbegriff des Patentanspruchs 11 sowie eine Verwendung einer solchen Vorrichtung bzw. eines solchen Verfahrens zur Kommissionierung.

Eine gattungsgemäße Vorrichtung bzw. ein gattungsgemäßes Verfahren sind bspw. in Form von Systemen und deren Verwendung in Apotheken bekannt. Ein derartiges System besteht aus einer Lagereinrichtung mit übereinander angeordneten Lagerregalen und einer entlang der Lagerregale bewegbaren Handhabungseinrichtung (bspw. Roboterarm mit Greifer oder Greifern), die dazu dient, zu lagernde, in Kartons verpackte Medikamente auf den Lagerregalen abzulegen bzw. auf Bestellung (mittels eines externen Rechners) das angefragte Medikament dem entsprechenden Lageregal zu entnehmen und zu einem Lagerausgang zu transportieren. Dort wird das angefragte Medikament typischerweise in einen Ausgabeschacht oder auf ein Ausgabeband überführt.

Die gattungsgemäße Vorrichtung bzw. das gattungsgemäße Verfahren sind jedoch lediglich dazu geeignet, einzelne bestellte Medikamente in der Reihenfolge der Abfrage bzw. Bestellung auszugeben.

Die WO 2011/151275 A1 offenbart ein Kommissioniersystem, wobei ein Lagerverwaltungsrechner eine Fläche auf einem Zentralband virtuell festlegen kann, auf der ein Kommissionierauftrag kommissioniert werden soll. Das sich ständig bewegende Zentralband wird an verschiedenen Automaten vorbeigeführt, die in Schachteln verpackte Medikamente auf die virtuelle Fläche abgeben können. Am Ende des Zentralbands werden die kommissionierten Schachteln in einen Auffangbehälter für diesen Kommissionierauftrag eingebracht und von dort mit dem Transportsystem versandbereit gemacht oder an einen anderen Kommissionierplatz transportiert.

Die DE 35 33 382 A1 offenbart eine rechnergesteuerte Kommissionieranlage, wobei Artikel aus geneigten Vorratsbehältern auf ein Sammelband fallen und dort lose Häufchen bilden, die am Ende des Förderbands in Kisten fallen.

Die DE 28 35 404 A1 offenbart ein System zur Lagerung und Ausgabe von Gegenständen, insbesondere Medikamenten, wobei einzelne Gegenstände lose auf ein zentrales Förderband fallen und von einem Querband in einen Auffangbehälter gefördert werden.

Die DE 20 2016 103 890 U1 offenbart ein Kommissioniersystem, wobei Objekte aus Lagerfächern zur Kommissionierung eines Auftrags zunächst umgelagert werden.

Die DE 10 2004 017 579 A1 offenbart eine Kommissionieranlage für Medikamente, wobei die Medikamente manuell ungeordnet auf ein Sammelband gelegt werden und über einen zentralen Sortierer in verschiedene Auffangbehälter rutschen können.

Die US 2020/0324974 A1 offenbart Speichertransportbänder zur Aufnahme, zum Zwischenspeichern und zum Transport von Produkten. Zur Ausbildung einer Lagereinrichtung können mehrere Speichertransportbänder in mehreren Ebenen übereinander angeordnet sein. Die Produkte können über eine Rutsche von den Speichertransportbändern in eine Kiste überführt werden.

Die WO 2004014765 A2 offenbart zwei Lagerregale, denen ein gemeinsames Transportband zugeordnet ist. Die einzelnen Regale sind derart schräg zum Transportband angeordnet, dass die Produkte beim Öffnen einer Klappe des jeweiligen Regalbretts auf das Transportband fallen. Das Transportband überlappt an seinem Ende ein rechtwinklig dazu und unterhalb des Transportbands verlaufendes Förderband, auf dem Kisten transportiert werden können.

Auf dem Transportband transportierte Produkte werden ans Ende des Transportbands gefördert und fallen in eine auf dem Förderband befindliche Kiste.

Die Aufgabe der vorliegenden Erfindung besteht darin, ein System, ein Verfahren und eine Verwendung anzugeben, so, dass verschiedenartige, insbesondere beliebig verpackte Gegenstände eingelagert und kontrolliert ausgegeben werden können, wobei insbesondere eine optimierte Kommissionierung für die Brillenherstellung ermöglicht wird.

Die Aufgabe wird durch eine Vorrichtung gemäß Patentanspruch 1, ein Verfahren gemäß Patentanspruch 11 oder eine Verwendung gemäß Patentanspruch 15 gelöst.

Das vorschlagsgemäße System zeichnet sich vorzugsweise dadurch aus, dass inbesondere jede Lagereinrichtung mindestens ein Sammelband aufweist, welches sich entlang der Lagerregale erstreckt und in den Lagerausgang mündet, dass mindestens ein Transportband für Transportkisten sich entlang der Lagerausgänge erstreckt, dass an insbesondere jedem Lagerausgang eine Handhabungsvorrichtung vorgesehen ist, die geeignet ist, eine Transportkiste mit auf dem jeweiligen Sammelband befindlichen lagerbaren bzw. gelagerten Gegenständen zu beladen, derart, dass abschließend jede Transportkiste zu lagernde bzw. gelagerte Gegenstände enthält, die zu genau einem definierten Arbeitsauftrag gehören.

Das vorschlagsgemäße Verfahren zeichnet sich vorzugsweise durch die folgenden Verfahrensschritte aus: Ablage gelagerter Gegenstände auf mindestens einem Sammelband derart, dass Gegenstände, die zu einem definierten Arbeitsauftrag gehören, benachbart zueinander abgelegt werden, Transport der auf dem mindestens einen Sammelband abgelegten Gegenstände zum Lagerausgang, Beladen einer Transportkiste mit den abgelegten Gegenständen, die zu einem definierten Arbeitsauftrag gehören, Heraustransport der beladenen Transportkiste aus dem System.

Ein anderer, auch unabhängig realisierbarer Aspekt der vorliegenden Erfindung sieht vorzugsweise vor, dass Lagerbehälter mit darin befindlichen Gegenständen zunächst für einen Arbeitsauftrag zusammengestellt werden und dann die Gegenstände für den Arbeitsauftrag aus den Lagerbehältern in eine Transportkiste umgeladen werden. Anschließend erfolgt dann vorzugsweise eine Rückförderung der Lagerbehälter und Beladung bzw. Beschickung mit neuen Gegenständen zur Einlagerung bzw. Zwischenlagerung.

Vorschlagsgemäß wird insbesondere eine automatisierte und optimierte Kommissionierung von Gegenständen für die Brillenherstellung ermöglicht. Hierbei ist zu berücksichtigen, dass die jeweils für die Herstellung einer Brille erforderlichen Gegenstände, insbesondere Linsen bzw. Linsenrohlinge, aber auch eine Brillenfassung, ein Werkzeug und/oder dergleichen, insbesondere definiert bzw. an bestimmten Positionen in einer Transportkiste abgelegt und/oder mittels eines Lagerbehälters bzw. einer Transportkiste automatisiert ausgelagert oder abgegeben werden, um eine einfache automatisierte Brillenherstellung zu ermöglichen.

Mit dem vorschlagsgemäßen System bzw. dem vorschlagsgemäßen Verfahren ist es (im Gegensatz zum gattungsgemäßen Stand der Technik) möglich, zu lagernde Gegenstände zwar an beliebigen Positionen innerhalb der Lagereinrichtung zu lagern, gelagerte Gegenstände aber gezielt so auszugeben, dass insbesondere zusammengehörige Gegenstände, d.h. Gegenstände, die zu demselben Arbeitsauftrag gehören, auf einem Sammelband zusammen, d. h. im Wesentlichen nebeneinander abzulegen, derart, dass sie nacheinander am Lagerausgang erscheinen, so dass ein und dieselbe Transportkiste mit ihnen bestückt werden kann. Mit anderen Worten: Die gelagerten Gegenstände werden nicht in der Reihenfolge ihrer Bestellung bzw. Abfrage, sondern nach dem jeweiligen Arbeitsauftrag geordnet abgegeben.

Derartige Arbeitsaufträge sind typischerweise Herstellungs- bzw. Montageaufträge, wobei die gelagerten, zu einem Arbeitsauftrag gehörenden Gegenstände Komponenten für die Herstellung bzw. Montage eines Zwischenprodukts oder Endproduktes sind.

Eine besonders bevorzugte Anwendung bzw. Verwendung des vorschlagsgemäßen Systems bzw. des vorschlagsgemäßen Verfahrens bezieht sich auf die optische Industrie, insbesondere die Herstellung von Brillen. Hierzu werden typischerweise zwei Linsenrohlinge, ggf. unterschiedlicher Verarbeitungsstufen, eine dazugehörige Brillenfassung und/oder ein oder mehrere Blockstücke kombiniert, die zu dem gleichen Arbeitsauftrag, beispielsweise für eine insbesondere individuell spezifizierte Brille, gehören.

Vorteilhafte Weiterbildungen ergeben sich aus den Unteransprüchen.

Bevorzugt sind mindestens drei Lagereinrichtungen vorgesehen. Je mehr Lagereinrichtungen vorgesehen sind, desto mehr Gegenstände können, je nach Kundenwunsch, gelagert werden. Ferner erhöht sich die Redundanz des vorschlagsgemäßen Systems, da bspw. bei Ausfall einer Lagereinrichtung die verbleibenden Lagereinrichtungen nach wie vor funktionstüchtig sind. Hierbei ist es von Vorteil, wenn die zu lagernden Gegenstände nach Art und Typ insbesondere gleichmäßig auf alle vorhandenen Lagereinrichtungen verteilt sind, damit jede Art bzw. jeder Typ von Gegenstand zugänglich ist, auch wenn eine Lagereinrichtung ausfällt.

Eine bevorzugte Weiterbildung der vorliegenden Erfindung besteht darin, dass das mindestens eine Sammelband derart ausgebildet und/oder gesteuert ist, um zu lagernde Gegenstände, die zu einem definierten Arbeitsauftrag gehören, zusammen zum Lagerausgang zu transportieren.

In besonders bevorzugter Weise ist das mindestens eine Sammelband getaktet gesteuert. Diese Weiterbildung erlaubt es, den Durchsatz der Ausgabe gelagerter Gegenstände insbesondere an individuelle Kundenwünsche anzupassen. Ferner wird die gemeinsame Ablage zu einem Arbeitsauftrag gehörender Gegenstände auf dem Sammelband vereinfacht.

Eine weitere, besonders bevorzugte Ausführungsform der vorliegenden Erfindung zeichnet sich dadurch aus, dass mindestens zwei, vorzugsweise drei Transportspuren für Transportkisten vorgesehen sind. Damit sind Überholvorgänge möglich, so dass Transportkisten unabhängig voneinander zu einem Lagerausgang einer beliebigen Lagereinrichtung transportiert werden können.

Vorzugsweise sind die mindestens zwei Transportspuren derart ausgebildet, dass Transportkisten zwischen den mindestens zwei Transportspuren verschiebbar sind. Dies erhöht die Flexibilität des Transports der Transportkisten zu den verschiedenen Lagerausgängen.

Zweckmäßigerweise ist mindestens eine Transportspur derart ausgebildet, dass beladene Transportkisten aus dem System heraustransportiert werden, d.h. dass insbesondere fertig beladene Transportkisten auf dieser Transportspur gesammelt und insbesondere nacheinander aus dem System ausgeschleust werden.

Vorzugsweise ist zumindest ein Teil der zu lagernden Gegenstände in Lagerbehältern aufgenommen. Die Lagerbehälter dienen vorzugsweise zur Aufnahme von Gegenständen, insbesondere von Gegenständen, die nicht in Kartonagen verpackt sind, also nicht wie bei der eingangs beschriebenen Medikamentenlagerung in die Lagersysteme hinein transportiert und auf Lagerregalen abgelegt werden können. Die Verwendung von Lagerbehältern hat den Vorteil, dass die in den Lagereinrichtungen vorgesehenen Handhabungseinrichtungen die Lagerbehälter handhaben können, ohne eine Modifizierung zu benötigen.

Zweckmäßigerweise sind die Lagerbehälter mit einem auslesbaren Speichermedium, vorzugsweise einem RFID-Chip, versehen, um diese zu individualisieren.

Weiter ist vorzugsweise mindestens ein Lesegerät vorgesehen, welches geeignet ist, das auslesbare Speichermedium und/oder eine auf dem lagerbaren Gegenstand bzw. seiner Verpackung befindliche Kennzeichnung, wie bspw. einen Barcode, auszulesen. Dadurch können Lagerbehälter und darin aufgenommener Gegenstand einander zugeordnet bzw. "gepaart werden".

Unter dem Ausdruck "gepaart" ist hier vorzugsweise zu verstehen, dass das auslesbare Speichermedium eines Lagerbehälters und/oder einer Transportkiste (siehe unten) und die auf der Kennzeichnung eines Gegenstandes oder dessen Verpackung insbesondere in Form von Daten miteinander verknüpft werden.

Die verknüpften Daten können in einer Datenbank und/oder auf dem auslesbaren Speichermedium abgelegt bzw. gespeichert werden. Dies ermöglicht insbesondere, dass beim Transport der Gegenstände bzw. Lagerbehälter und/oder Transportkisten durch das vorschlagsgemäße System nur noch das Speichermedium des Lagerbehälters bzw. der Transportkiste ausgelesen werden muss, um insbesondere die Daten des Gegenstandes zu erhalten.

Das vorschlagsgemäße System bekommt bzw. hat so die Information, in welchem Lagerbehälter welcher Gegenstand aufgenommen ist bzw. auf welchem Regalplatz dieser Lagerbehälter abgelegt ist.

Wird ein in einem Lagerbehälter aufgenommener Gegenstand bestellt bzw. abgerufen, wird dieser Lagerbehälter mit dem darin aufgenommenen bestellten bzw. abgerufenen Gegenstand auf das mindestens eine Sammelband abgelegt.

Nach dem Beladen der Transportkisten mit Gegenständen bleiben leere Lagerbehälter zurück. Diese können vorteilhafterweise mittels eines Rücklaufbands zu einer Packstation bzw. zu einem Vorratsbehälter zurückgeführt werden, um dort neu bestückt bzw. gelagert zu werden.

Einzelne der vorgenannten und nachfolgenden Aspekte und Merkmale der vorliegenden Erfindung können beliebig miteinander kombiniert, aber auch unabhängig voneinander realisiert werden.

Weitere Aspekte, Merkmale, Vorteile und Eigenschaften der vorliegenden Erfindung ergeben sich aus den Ansprüchen und der nachfolgenden Beschreibung einer bevorzugten Ausführungsform anhand der Zeichnungen.

Es zeigen in schematischer, nicht maßstabsgetreuer Darstellung:
- Fig. 1: eine schematische Draufsicht eines vorschlagsgemäßen Systems;
- Fig. 2: das System in einer ersten perspektivischen Darstellung;
- Fig. 3: das System in einer zweiten perspektivischen Darstellung;
- Fig. 4: das System mit schematischer Darstellung von Sammelbändern;
- Fig. 5: eine schematische Detailansicht eines Sammelbands mit einer ersten Taktung;
- Fig. 6: eine schematische Detailansicht eines Sammelbands mit einer zweiten Taktung;
- Fig. 7: eine schematische Detailansicht der Lagerausgänge mit Sammelbändern, Transportspuren und Rücklaufbändern.

In den Figuren werden für gleiche Komponenten und Bauteile die gleichen Bezugszeichen verwendet, auch wenn eine wiederholte Beschreibung weggelassen ist.

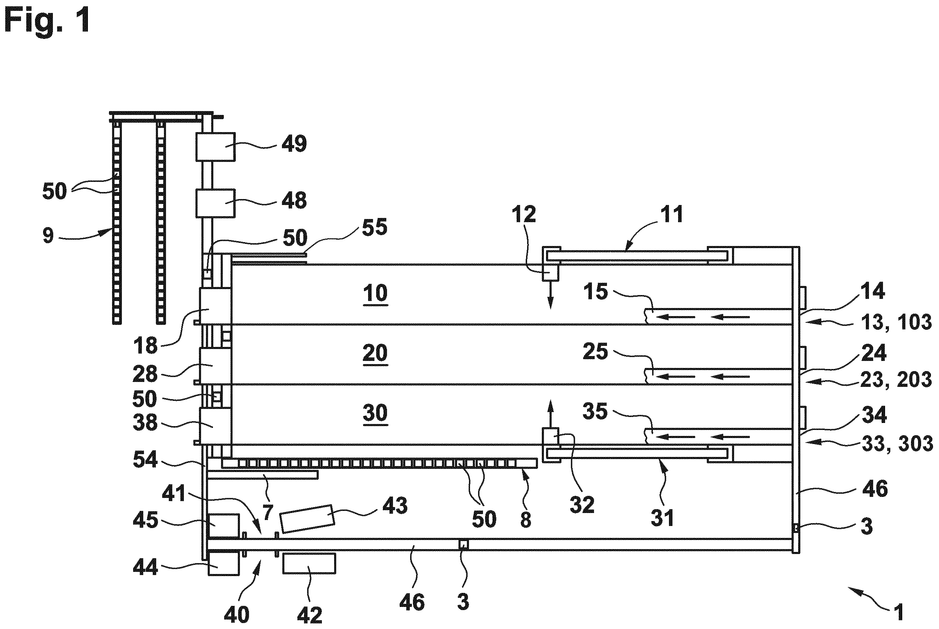

Die Fig. 1 bis 3 zeigen ein Ausführungsbeispiel eines vorschlagsgemäßen Systems 1 zum Kommissionieren bzw. zum Transport, zur Lagerung und/oder zur Ausgabe von Gegenständen 2.

Bei den Gegenständen 2 im Sinne der vorliegenden Erfindung handelt es sich vorzugweise um Gegenstände der optischen Industrie, insbesondere zur Herstellung von Brillen, beispielsweise um, insbesondere ophthalmische, Linsen bzw. Linsenrohlinge, Brillenfassungen, Blockstücke und/oder Verbrauchgüter bzw. Werkzeuge, insbesondere zur Bearbeitung ophthalmischer Linsen. Optional kann es sich jedoch auch um Kontaktlinsen bzw. Gegenstände für die Herstellung von Kontaktlinsen handeln.

Vorzugsweise werden für Herstellungsaufträge (Arbeitsaufträge) in der optischen Industrie jeweils mehrere Gegenstände 2 benötigt. Typischerweise werden zur Herstellung von Brillen zwei Linsenrohlinge oder fertig bearbeitete Linsen, eine Brillenfassung und/oder ein oder mehrere Blockstücke kombiniert, insbesondere die zu einem Arbeitsauftrag gehören.

Unter einem "Arbeitsauftrag" im Sinne der vorliegenden Erfindung ist vorzugsweise ein Herstellungsauftrag in der optischen Industrie, insbesondere ein Auftrag zur Herstellung einer Brille, zu verstehen. Optional kann es sich jedoch auch um einen Auftrag zur Herstellung von Kontaktlinsen bzw. Kontaktlinsenpaaren handeln.

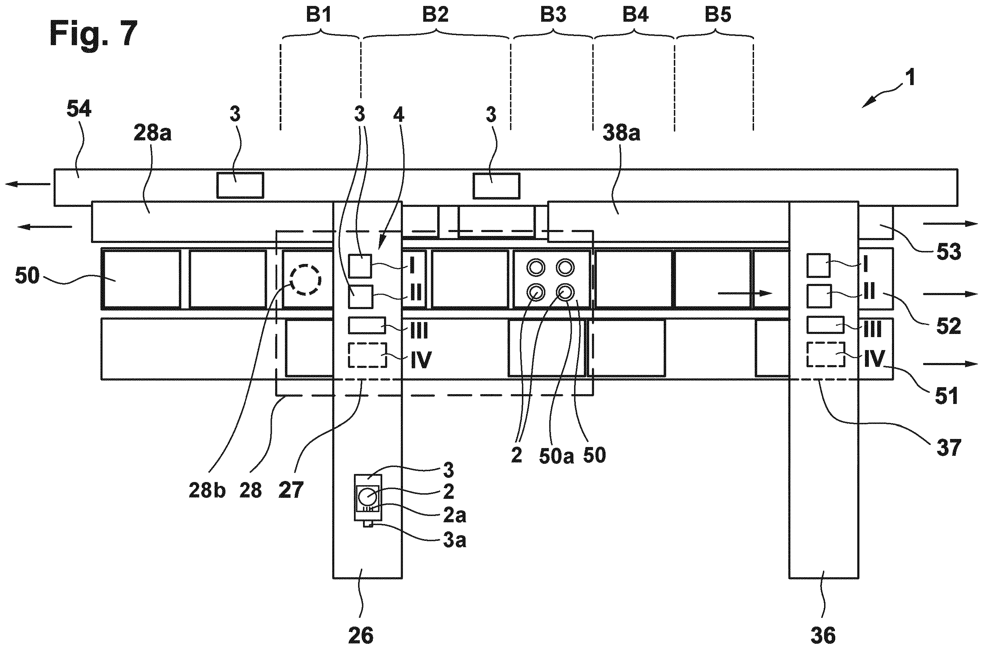

Ein Arbeitsauftrag 4 umfasst vorschlagsgemäß ein oder mehrere Gegenstände 2 im Sinne der vorliegenden Erfindung, insbesondere mehrere oder alle Gegenstände 2, die zur Herstellung eines optischen Gegenstands bzw. Produkts, wie einer Brille oder sonstiger optischer Hilfsmittel, erforderlich sind. In Fig. 7 sind beispielhaft mehrere Gegenstände 2 eines Arbeitsauftrags 4 dargestellt, wobei sich beim Darstellungsbeispiel vier Gegenstände 2 des Arbeitsauftrags 4 an Ablagepositionen I, II, III, IV und insbesondere (noch) in Lagerbehältern 3 befinden.

Die Gegenstände 2 können unverpackt oder insbesondere beliebig verpackt sein, beispielsweise in Kartonagen, Beuteln, insbesondere aus Plastik, und/oder sonstigen an sich bekannten Behältnissen, wie in Fig. 7 auf einem Sammelband 26 weiter unten schematisch für einen in einem Lagerbehälter 3 befindlichen Gegenstand 2 schematisch angedeutet.

Der Gegenstand 2 kann grundsätzlich auch verpackt sein und/oder selbst bzw. auf seiner Verpackung mit einer Kennzeichnung 2a, wie einem Barcode, einer Nummer o.d.gl., versehen sein, wie unten in Fig. 7 angedeutet.

Bei den Gegenständen 2, insbesondere pro Arbeitsauftrag, kann es sich um verschiedene und/oder gleichartige Gegenstände handeln.

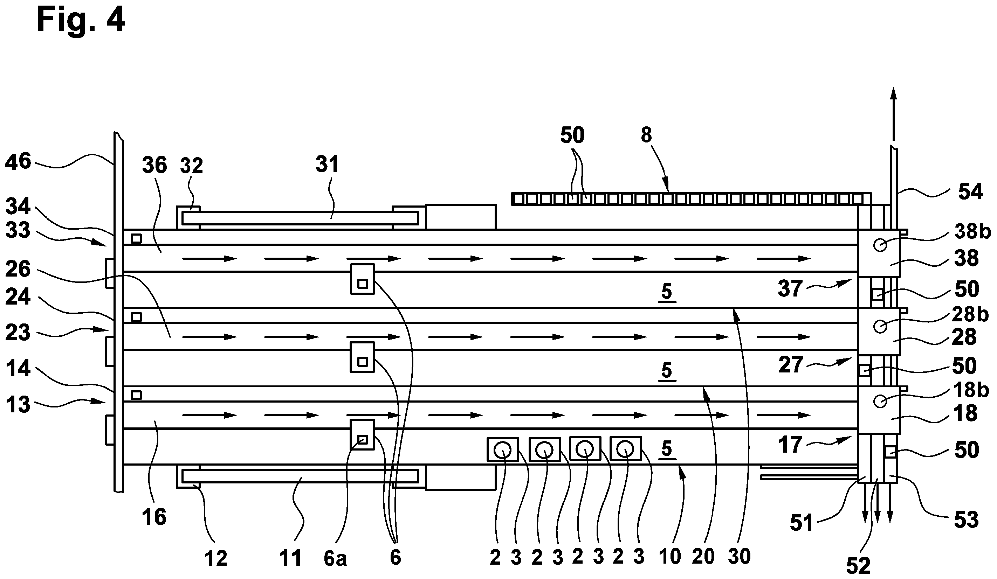

Das System 1 weist vorzugsweise mehrere, beim Darstellungsbeispiel drei Lagereinheiten 10, 20, 30 zur Aufnahme bzw. Lagerung der Gegenstände 2 auf, wie in Fig. 1 bis 3 angedeutet, die insbesondere jeweils ein Lagerregal 5 aufweisen, wie in Fig. 4 schematisch angedeutet.

In einer bevorzugten Ausführungsform des vorschlagsgemäßen Systems 1 dienen die Lagereinheiten 10 und 30 der Lagerung aller denkbaren Arten von zu lagernden bzw. gelagerten Gegenständen 2, wie Brillenfassungen, Linsenrohlingen, Linsen unterschiedlicher Verarbeitungsstufen bzw. Verbrauchsgütern, während die Lagereinheit 20 vorzugsweise zur Lagerung von in Lagerbehältern 3 aufgenommenen Gegenstände 2, wie in Beuteln verpackten Brillenfassungen, dient.

Vorzugsweise weist das System 1 Beladeeinrichtungen 11, 31 auf.

Die Beladeeinrichtungen 11, 31 dienen vorzugsweise zum Beladen der Lagereinheiten 10 bzw. 30 mit Gegenständen 2, die - ähnlich wie Medikamente oder andere pharmazeutische Produkte - insbesondere einzelweise in Kartonagen verpackt sind, wie Linsenrohlinge.

Beim Darstellungsbeispiel weist die Beladeeinrichtung 11, 31 ein Behältnis mit insbesondere einem Transportband, eine Vereinzelungseinrichtung und ein Laufband 12, 32 auf.

Das Behältnis dient dazu, die insbesondere verpackten Gegenstände 2, welche in den Lagereinheiten 10, 30 eingelagert bzw. aufgenommen werden sollen, ungeordnet bzw. unsortiert aufzunehmen, wobei das insbesondere integrierte Transportband die zu lagernden Gegenstände 2 automatisiert in Richtung der Vereinzelungseinrichtung bzw. in Richtung eines Lagereingangs transportiert. Mittels der Vereinzelungseinrichtung werden die insbesondere ungeordneten Gegenstände 2 separiert und einzelweise über ein Laufband 12, 32 in die Lagereinheit 10, 30 gefördert bzw. geführt. Von dort aus werden die zu lagernden Gegenstände 2 einzelweise automatisiert bzw. von einer Handhabungseinrichtung (nicht dargestellt) aufgenommen und auf einem Lagerplatz in einem Lagerregal 5 der jeweiligen Lagereinheit 10, 30 abgelegt.

Vorzugsweise befinden sich die Beladeeinrichtungen 11, 31 an den Längsseiten der Lagereinrichtungen 10, 30. Besonders bevorzugt sind die Beladeeinrichtungen 11, 31 derart angeordnet, dass sie einer Bedienperson zugänglich sind.

Die Beladeeinrichtungen 11, 31 dienen vorzugsweise zum automatisierten und insbesondere geordneten Beladen der Lagereinheiten 10, 30.

Das Befüllen bzw. Bestücken des Behältnisses bzw. Transportbandes der Beladeeinrichtungen 11, 31 erfolgt vorzugsweise manuell, insbesondere durch eine Bedienperson.

In einer bevorzugten Ausführungsform liegen die zu lagernden Gegenstände 2, die über die Beladeeinrichtungen 11, 31 eingelagert werden sollen, zunächst in Gebinden mit mehreren einzelweise in Kartonagen verpackten Gegenständen 2, hier insbesondere Linsenrohlingen, vor. Die in Kartonagen verpackten Gegenstände 2 werden ggf. aus einer zu dem Gebinde gehörenden Umverpackung befreit, um anschließend auf das Transportband der Beladeeinrichtung 11, 31 insbesondere ungeordnet gegeben, besonders bevorzugt geschüttet zu werden. Dies erfolgt vorzugsweise manuell bzw. durch eine Bedienperson.

Nach dem vorzugsweise manuellen Befüllen der Beladeeinrichtung 11, 31 mit zu lagernden Gegenständen 2 erfolgen der Transport der Gegenstände 2 mittels des Transportbandes zur Vereinzelungseinrichtung, die Vereinzelung der Gegenstände 2 und/oder die Einlagerung über das Laufband 12, 32 vorzugsweise automatisch.

Weiter dient die Beladeeinrichtung 11, 31 insbesondere dazu, die zu lagernden Gegenstände 2 einzelweise und/oder geordnet bzw. in einer definierten Position auf das Laufband 12, 32 zu geben und/oder einzulagern.

Weiter weist das System 1 vorzugsweise ein oder mehrere Einlagereinrichtungen 13, 23, 33 auf, die insbesondere den Lagereinheiten 10, 20, 30 zugeordnet sind. Beim Darstellungsbeispiel weisen die Lagereinheiten 10, 20, 30, insbesondere an jeweils einer ihrer Stirnseiten, je eine oder mehrere Einlagereinrichtungen 13, 23, 33 auf.

Die Einlagereinrichtungen 13, 23, 33 dienen insbesondere dazu, in Lagerbehältern 3 aufgenommene Gegenstände 2 einzulagern bzw. in die Lagereinheiten 10, 20, 30 zu transportieren, insbesondere über entsprechende Lagereingänge 103, 203, 303.

Bei den Lagerbehältern 3 handelt es sich vorzugsweise um Kisten, die insbesondere unterschiedliche Bemaßungen bzw. Größen aufweisen können. Alternativ können auch hier Lagerbehälter 3 nur einer Größe eingesetzt werden. Die Lagerbehälter 3 bestehen vorzugsweise aus Kunststoff, können jedoch auch aus einem sonstigen Material bestehen.

Die Lagerbehälter 3 dienen dazu, zumindest einen Teil oder alle der insbesondere zu lagernden Gegenstände 2 vorzugsweise einzelweise aufzunehmen.

Die Lagerbehälter 3 können unverpackte und beliebig, besonders bevorzugt in Beuteln und/oder Tüten, verpackte Gegenstände 2 aufnehmen.

Vorzugsweise weisen die Lagerbehälter 3 ein insbesondere integriertes Speichermedium 3a, besonders bevorzugt einen RFID-Chip, insbesondere zu deren Individualisierung, auf d.h. jeder Lagerbehälter 3 hat vorzugsweise seine eigene bzw. individuelle Kennung, wie bspw. eine Ziffer- und/oder Buchstabenkombination.

Vorzugsweise weist das System 1 ein oder mehrere Packstationen 40, 41 auf.

Beim Darstellungsbeispiel sind die Packstationen 40, 41 an einem Laufband oder mehreren Laufbändern 46 des Systems 1 angeordnet. Alternativ oder zusätzlich können die Packstationen 40, 41 jedoch auch dem System 1 ausgelagert bzw. von diesem separiert sein.

Vorzugsweise werden an den Packstationen 40, 41 Gegenstände 2, insbesondere in beliebigen Verpackungseinheiten 42, 43, und/oder bevorzugt in Vorratsbehältern 44, 45 vorgehaltene, Lagerbehälter 3 angeliefert bzw. bereitgestellt.

Beim Darstellungsbeispiel dienen die Packstationen 40, 41 insbesondere dazu, die angelieferten Gegenstände 2 insbesondere einzelweise in je einen Lagerbehälter 3 zu überführen. Hier kann bspw. eine Brillenfassung in einen größeren Lagerbehälter 3 und eine "finished lens", d.h. eine insbesondere fertig bearbeitete Linse, in einen kleineren Lagerbehälter 3 überführt werden.

Das Überführen eines Gegenstandes 2 in einen Lagerbehälter 3 kann - wie in den Figuren 1 bis 3 angedeutet - manuell, insbesondere durch eine Bedienperson, geschehen. Alternativ oder zusätzlich kann dies jedoch auch automatisch erfolgen bzw. insbesondere ein automatisiertes Entpacksystem vorgesehen sein.

Nach dem Bestücken eines Lagerbehälters 3 mit einem zu lagernden Gegenstand 2 wird der vorbezeichnete Lagerbehälter 3 eingelagert und hierzu zunächst vorzugsweise auf einem Laufband 46 abgelegt.

Vorzugsweise weist das System 1 ein Laufband 46, besonders bevorzugt mehrere, insbesondere zwei, Laufbänder 46 auf. Diese dienen insbesondere zum Transport der insbesondere mit Gegenständen 2 bestückten Lagerbehälter 3 zu den Lagereingängen 103, 203, 303 bzw. zu den Einlagereinrichtungen 13, 23, 33.

Zum Transport unterschiedlicher Lagerbehälter 3 bzw. von Lagerbehältern 3 mit unterschiedlichen Bemaßungen bzw. Größen können die Laufbänder 46 unterschiedliche Bemaßungen bzw. Breiten, je nach Bemaßung bzw. Breite der Lagerbehälter 3, aufweisen.

Die mit Gegenständen 2 bestückten Lagerbehälter 3 werden auf einem oder mehreren Laufbändern 46 vorzugsweise zunächst zu einem Lesegerät geführt (nicht dargestellt). Das Lesegerät dient insbesondere dazu, die auf dem Speichermedium 3a bzw. RFID-Chip der Lagerbehälter 3 gespeicherten Daten und/oder die Daten auszulesen, die, bspw. in Form eines Barcodes bzw. sonstigen Kennzeichnung 2a, auf der Verpackung der in einem Lagerbehälter 3 aufgenommenen Gegenstände 2 oder darauf selbst gespeichert sind.

Im Darstellungsbeispiel werden diese Daten miteinander kombiniert bzw. "gepaart" derart, dass im vorschlagsgemäßen System 1 oder auch alternativ auf dem Speichermedium 3a des Lagerbehälters 3 abgespeichert ist, welcher Gegenstand 2 in welchem Lagerbehälter 3 aufgenommen ist.

Im Darstellungsbeispiel werden die insbesondere mit Gegenständen 2 bestückten Lagerbehälter 3 anschließend zu den Einlagereinrichtungen 13, 23, 33 transportiert, insbesondere mittels des bzw. auf dem Laufband 46.

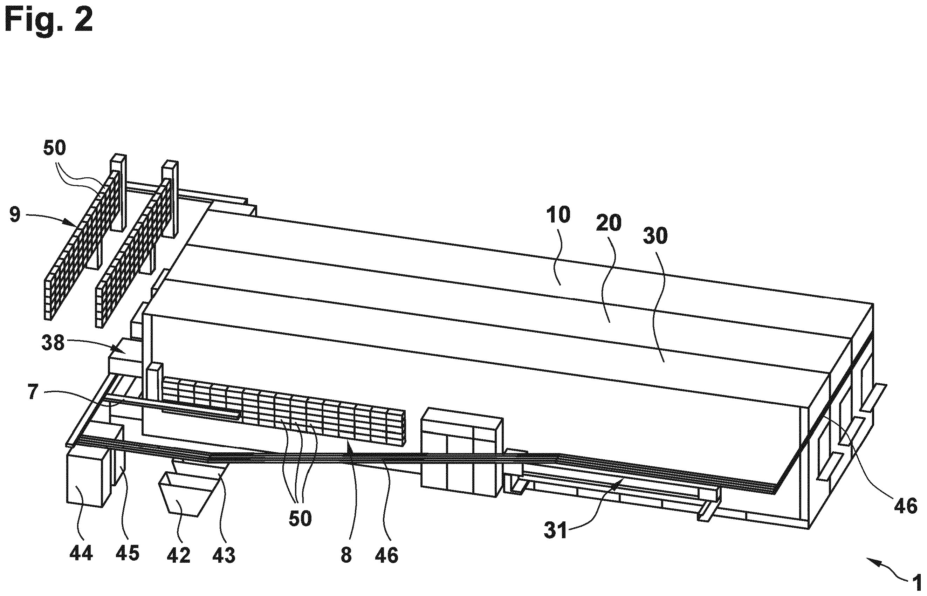

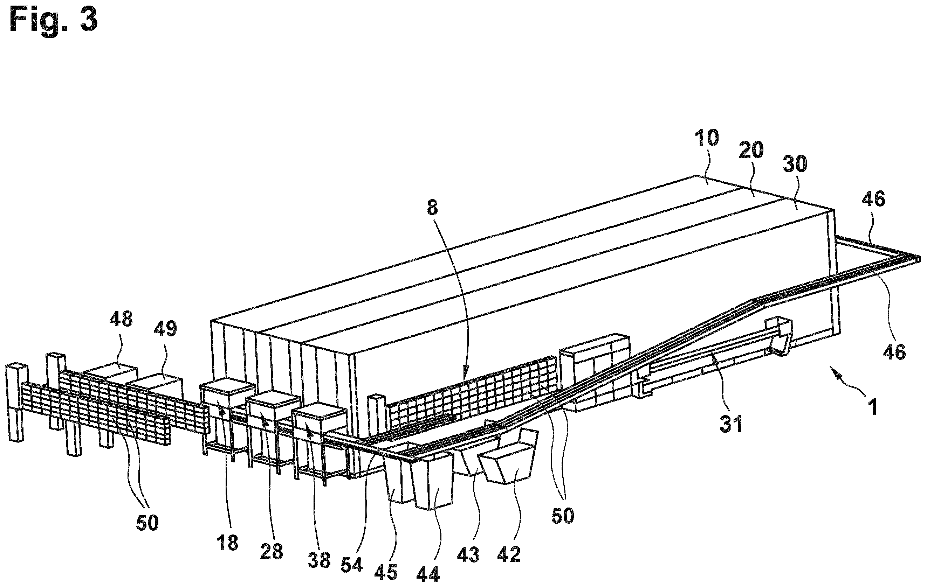

In einer bevorzugten Ausführungsform verlaufen die Laufbänder 46 entlang der Lagereinrichtung 10 bzw. erstrecken sich an deren Längsseite (siehe Fig. 2 und 3). Besonders bevorzugt sind die Laufbänder 46 parallel zueinander angeordnet.

Weiter sind die Laufbänder 46 vorzugsweise als Rampe ausgebildet bzw. erstrecken sich insbesondere entlang der Lagereinrichtung 10 schräg nach oben, insbesondere in Richtung der Einlagereinrichtungen 13, 23, 33. Auf diese Weise werden die Lagerbehälter 3 zu den Einlagereinrichtungen 13, 23, 33 transportiert.

Die Einlagereinrichtungen 13, 23, 33 sind vorzugsweise in einer anderen oder höheren Ebene als die Beladeeinrichtungen 11, 31 angeordnet.

Die Einlagereinrichtungen 13, 23, 33 dienen insbesondere dazu, in Lagerbehältern 3 aufgenommene Gegenstände 2 einzulagern bzw. in die Lagereinheiten 10, 20, 30 zu transportieren.

Vorzugsweise weist die Einlagereinrichtung 13, 23, 33 eine Umsetzvorrichtung, bspw. eine Greifvorrichtung und/oder einen Schieber, auf. Diese dient bevorzugt dazu, die Lagerbehälter 3, insbesondere vom Laufband 46, auf ein Einlagerband 15, 25, 35 zu transportieren bzw. zu greifen und/oder zu schieben.

In einer bevorzugten Ausführungsform ist die Umsetzvorrichtung eine Greifvorrichtung, die den einzulagernden Lagerbehälter 3 vom Laufband 46 nimmt bzw. greift, den Lagerbehälter 3 anhebt und diesen anschließend auf ein Einlagerband 15, 25, 35 ablegt.

Die Einlagerbänder 15, 25, 35 dienen vorzugsweise dazu, die insbesondere mit Gegenständen 2 bestückten Lagerbehälter 3 ins Innere der Lagereinheiten 10, 20, 30 zu transportieren. Dort werden die Lagerbehälter 3 automatisiert bzw. von einer Handhabungseinrichtung (nicht dargestellt) aufgenommen und in einem Lagerregal 5, insbesondere auf einem Lagerplatz eines Lagerregals 5, abgelegt.

Vorzugsweise weist das System 1, insbesondere an den bzw. im Bereich der Einlagereinrichtungen 13, 23, 33, eine oder mehrere Leseeinrichtungen 14, 24, 34, insbesondere für auslesbare Speicherelemente, wie bspw. RFID-Chips und/oder Barcodes, auf.

Die Leseeinrichtungen 14, 24, 34 dienen vorzugsweise dazu, das Speichermedium 3a bzw. den RFID-Chip des Lagerbehälters 3 auszulesen. Dies dient vornehmlich dem Zweck, die über das Laufband 46 bzw. über die Rampe angelieferten, mit zu lagernden Gegenständen 2 bestückten Lagerbehälter 3 zu detektieren bzw. nachzuverfolgen und/oder den einzulagernden Lagerbehälter 3 einer Lagereinheit 10, 20, 30 zuzuordnen bzw. zu entscheiden, in welche Lagereinheit 10, 20, 30 der Lagerbehälter 3 transportiert bzw. eingelagert werden soll.

Das vorschlagsgemäße System 1 weiß nun also, in welchem Lagerbehälter 3 welcher Gegenstand 2 aufgenommen ist (übergeordnete Software) bzw. in welcher Lagereinrichtung 10, 20, 30 bzw. in welchem Lagerregal 5 und/oder Lagerplatz ein Lagerbehälter 3 bzw. ein bspw. mittels eines Barcodes definierter Gegenstand 2 abgelegt ist (Lagersoftware).

Optional weist das System 1 zusätzlich ein Förderband, insbesondere eine Rutsche, auf, die vorzugsweise dazu dient, Lagerbehälter 3, die nicht in eine der Lagereinheiten 10, 20, 30 transportiert bzw. eingelagert werden sollen, abzutransportieren bzw. auszuschleusen. Beispielsweise kann ein nicht auslesbares Speichermedium wie ein fehlerhafter oder mit fehlerhaften Daten behafteter RFID-Chip dazu führen, dass ein mit einem Gegenstand 2 bestückter Lagerbehälter 3, der über ein Laufband 46 zu einer Einlagereinrichtung 13, 23, 33 transportiert wurde, doch nicht eingelagert werden soll. In diesem Falle kann der entsprechende Lagerbehälter 3 an den Lagereingängen 103, 203, 303 bzw. Einlagereinrichtungen 13, 23, 33 vorbei in Richtung Förderband transportiert und über das Förderband abtransportiert bzw. aus dem System 1 ausgeschleust werden.

Fig. 4 zeigt einen vergrößerten Ausschnitt des Systems 1 gemäß der Fig. 1 bis 3, wobei der Schwerpunkt insbesondere auf der Kommissionierung der gelagerten Gegenstände 2 liegt.

Die Lagereinheiten 10, 20, 30, besonders bevorzugt jede Lagereinheit 10, 20, 30, weisen vorzugsweise ein Sammelband 16, 26, 36 auf, wobei sich das Sammelband 16, 26, 36 bevorzugt entlang der Lagerregale 5 erstreckt und insbesondere in jeweils einen Lagerausgang 17, 27, 37 mündet.

Die Sammelbänder 16, 26, 36 erstrecken sich beim Darstellungsbeispiel vorzugsweise über die gesamte Länge der Lagereinrichtung 10, 20, 30 bzw. Lagerregale 5. Die Sammelbänder 16, 26, 36 können aber auch kürzer ausgebildet sein, bspw. nur halb so lang, bzw. sich nur über eine Teilstrecke bzw. nicht über die gesamte Länge der Lagereinrichtungen 10, 20, 30 erstrecken.

Die Sammelbänder 16, 26, 36 dienen insbesondere dazu, in den Lagereinheiten 10, 20, 30 gelagerte Gegenstände 2 bzw. mit Gegenständen 2 bestückte Lagerbehälter 3 vorzugsweise arbeitsauftragsweise aufzunehmen und zum Lagerausgang 17, 27, 37 zu transportieren. Der Transport kann kontinuierlich und/oder getaktet erfolgen.

Optional können die Sammelbänder 16, 26, 36 auch durch die Einlagerbänder 15, 25, 35 oder umgekehrt gebildet werden.

Optional können die Beladeeinrichtungen 11, 31 und Laufbänder 12, 32 bzw. deren Funktion auch durch die Einlagereinrichtungen 13, 23, 33 realisiert werden.

Optional umfassen die Einlagereinrichtungen 13, 23, 33 die Einlagerbänder 15, 25, 35, und/oder die Leseeinrichtungen 14, 24, 34.

Vorzugsweise weisen die Lagereinheiten 10, 20, 30, Beladeeinrichtungen 11, 31 und/oder Einlagereinrichtungen 13, 23, 33 ein oder mehrere Handhabungseinrichtungen 6 (in Fig. 4 schematisch angedeutet) zum Einlagern von Gegenständen 2 (mit oder ohne Lagerbehälter 3) in ein Lagerregal 5 oder mehrere Lagerregale 5 und/oder zum Auslagern aus einem Lagerregal 5 oder mehreren Lagerregalen 5 auf.

Optional können die Handhabungseinrichtungen 6 auch die Leseeinrichtungen 14, 24, 34 aufweisen.

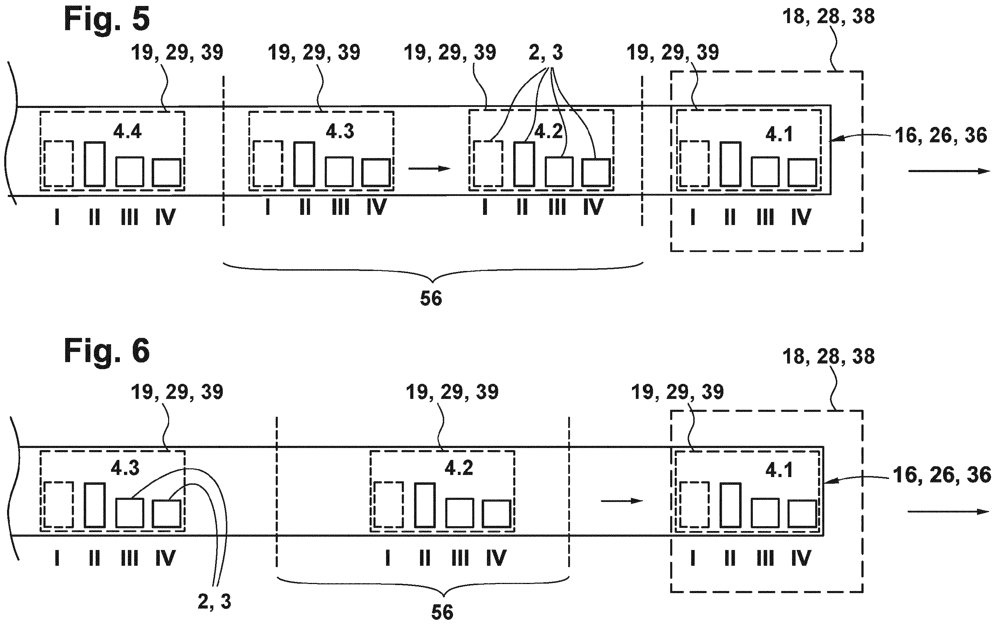

Figuren 5 und 6 zeigen Teilansichten von Sammelbändern 16, 26, 36 mit unterschiedlicher Steuerung bzw. Taktung.

Beim Darstellungsbeispiel wird angenommen, dass ein Arbeitsauftrag 4 bis zu vier, d.h. ein bis vier Gegenstände 2 umfasst. Beispielsweise kann ein Arbeitsauftrag 4 aus zwei Linsen bzw. Linsenrohlingen sowie zwei Blockstücken oder aus zwei Linsen bzw. Linsenrohlingen sowie einer Brillenfassung bestehen.

Weiter weist das Sammelband 16, 26, 36 vorzugsweise mindestens einen Ablageplatz 19, 29, 39 (gekennzeichnet durch die gestrichelte Umrandung), auf dem die Gegenstände 2 bzw. die mit Gegenständen 2 bestückten Lagerbehälter 3 aus dem Lagerregal 5 der entsprechenden Lagereinheit 10, 20, 30, die zu einem Arbeitsauftrag 4 gehören, abgelegt werden (sollen).

Dementsprechend weist der Ablageplatz 19, 29, 39 bzw. das Sammelband 16, 26, 36 pro Arbeitsauftrag 4 vorzugsweise vier Ablagepositionen I, II, III, IV auf.

Demgemäß können bis zu vier Gegenstände 2 bzw. mit Gegenständen 2 bestückte Lagerbehälter 3, die zu demselben Arbeitsauftrag 4 gehören, auf dem Sammelband 16, 26, 36 bzw. auf dem definierten Ablageplatz 19, 29, 39, insbesondere nebeneinander, auf den Ablagepositionen I, II, III und/oder IV abgelegt werden. Dabei müssen nicht alle Positionen besetzt sein. Beispielsweise kann auf den Ablagepositionen I, II je ein Linsenrohling und auf Position III eine Brillenfassung abgelegt werden, während Position IV frei bleibt.

Das Ablegen der Gegenstände 2 bzw. Lagerbehälter 3, die zu einem Arbeitsauftrag 4 gehören, auf dem Ablageplatz 19, 29, 39 des jeweiligen Sammelbandes 16, 26, 36 erfolgt vorzugsweise definiert (also insbesondere an den definierten Ablagepositionen I bis IV innerhalb des jeweiligen Ablageplatzes 19, 29, 39 oder generell innerhalb eines bestimmten Ablageplatzes 19, 29, 39) bzw. geordnet, einzelweise und/oder nebeneinander.

Vorzugsweise erfolgt das Ablegen auf das Sammelband 16, 26, 36 jeweils nur an einem defnierten bzw. einzigen (in Fig. 5 und 6 insbesondere dem ganz links liegenden) Ablageplatz 19, 29, 39.

Eine Handhabungseinrichtung 6, die schematisch in Fig. 4 angedeutet ist und optional auch der Einlagerung von Gegenständen 2 mit und/oder ohne Lagerbehälter 3 in das Lagerregal 5 dient, nimmt bzw. greift (vorzugsweise mittels eines nur schematisch angedeuteten Manipulators 6a) insbesondere nacheinander und/oder einzelweise einen Gegengestand 2 bzw. einen Lagerbehälter 3 von seinem jeweiligen Lagerplatz bzw. aus dem jeweiligen Lagerregal 5 und legt diesen definiert bzw. auf einer definierten Ablageposition I, II, III, IV auf dem Ablageplatz 19, 29, 39 bzw. dem Sammelband 16, 26, 36 ab. Auf diese Weise erfolgt ein insbesondere geordnetes Zusammenstellen bzw. Kommissionieren von zu einem Arbeitsauftrag 4 gehörenden Gegenständen 2 bzw. Lagerbehältern 3 mit den entsprechenden Gegenständen 2.

Die auf dem Ablageplatz 19, 29, 39 ablegten, zu einem Arbeitsauftrag 4 gehörenden Gegenstände 2 bzw. Lagerbehälter 3 werden anschließend auf dem Sammelband 16, 26, 36 zum Lagerausgang 17, 27, 37 transportiert bzw. gefördert. Dies kann in verschiedenen Varianten erfolgen.

In einer ersten Variante des vorschlagsgemäßen Verfahrens wird das Sammelband 16, 26, 36 langsam, aber kontinuierlich in Pfeilrichtung (in Richtung der jeweiligen Lagerausgänge 17, 27, 37) bewegt. Vorzugsweise ist die Geschwindigkeit gering genug, dass die Handhabungseinrichtung 6 alle demselben Arbeitsauftrag 4 zugehörigen Gegenstände 2 bzw. deren Lagerbehälter 3 von ihrem jeweilen Lagerplatz aufnehmen und auf den jeweiligen Positionen I, II, III, IV auf dem Sammelband 16, 26, 36 ablegen kann.

In einer zweiten, bevorzugten Variante des vorschlagsgemäßen Verfahrens wird das Sammelband 16, 26, 36 getaktet gesteuert. Insbesondere steht das Sammelband 16, 26, 36 still, solange bzw. während die Ablagepositionen I, II, III und/oder IV mit Gegenständen 2 bzw. ihren Lagerbehältern 3 besetzt werden. Dann wird das Sammelband 16, 26, 36 um eine bestimmte, vorgewählte Distanz in Pfeilrichtung (in Richtung der jeweiligen Lagerausgänge 17, 27, 37) bewegt und anschließend wieder gestoppt. Nun werden neue, flussaufwärts befindliche Ablagepositionen I, II, III, IV mit zu demselben Arbeitsauftrag 4 gehörenden Gegenständen 2 bestückt.

Diese zweite, bevorzugte Variante des vorschlagsgemäßen Verfahrens hat den Vorteil, dass, wie in den Figuren 5 und 6 dargestellt, jedes Sammelband 16, 26, 36, insbesondere je nach Kundenwunsch, individuell getaktet werden kann.

Das Darstellungsbeispiel gemäß Figur 5 zeigt, im Vergleich zu Figur 6, eine vergleichsweise kürzere Taktung, vorzugsweise wobei die beispielhaft gezeigten Arbeitsaufträge 4.1, 4.2, 4.3 und 4.4, insbesondere mit ihren jeweiligen Ablagepositionen I, II, III, IV, in geringerem Abstand voneinander auf dem Sammelband 16, 26, 36 definiert bzw. angeordnet sind. Zwischen dem linken Ablageplatz 19, 29, 39, der beispielsweise mit den Gegenständen 2 bzw. Lagerbehältern 3 - hier des Auftrags 4.4 - von der Handhabungseinrichtung 6 gerade belegt wird, und der Lage beim Umladen - hier dem rechten Ablageplatz 19, 29, 39 bzw. Auftrag 4.1 - wird eine Pufferzone 56 gebildet, die hier insbesondere zwei oder mehr Ablageplätze 19, 29, 39 bzw. Aufträge 4.2 und 4.3 umfasst.

Das Darstellungsbeispiel gemäß Figur 6 zeigt eine vergleichsweise längere Taktung, vorzugsweise wobei die Arbeitsaufträge 4.1, 4.2 und 4.3 insbesondere mit ihren jeweiligen Positionen I, II, III, IV, in größerem Abstand voneinander auf dem Sammelband 16, 26, 36 definiert sind. Hier umfasst die Pufferzone 56 beispielsweise nur einen Ablageplatz 19, 29, 39 bzw. Auftrag 4.2.

Figur 7 zeigt eine Detailansicht der jeweiligen Lagerausgänge 17 (nicht dargestellt), 27, 37 und illustriert den Vorgang des Überführens bzw. Umladens der mittels der Sammelbänder 16, 26, 36 angelieferten Gegenstände 2 in Transportkisten 50.

Das System 1 weist Transportkisten 50 auf, welche insbesondere zur Aufnahme und zum Transport von gelagerten und/oder kommissionierten bzw. arbeitsauftragsweise zusammengestellten Gegenständen 2 dienen.

Die Transportkisten 50 weisen vorzugsweise mehrere bzw. definierte Aufnahmeplätze 50a und vorzugsweise mindestens so viel Platz bzw. mindestens so viele Aufnahmeplätze 50a auf, dass alle Gegenstände 2 eines Arbeitsauftrages 4 in einer gemeinsamen Transportkiste 50 transportiert werden können. Besonders bevorzugt entspricht die Anzahl der verfügbaren Aufnahmeplätze 50a pro Transportkiste 50 der Anzahl der Ablagepositionen I, II, III, IV pro Ablageplatz 19, 29, 39 auf dem Sammelband 16, 26, 36. Mit anderen Worten entspricht eine Transportkiste 50 vorzugsweise einem Arbeitsauftrag 4.

Vorzugsweise weist das System 1 mehrere Transportspuren 51, 52, 53 auf.

Die Transportspuren 51, 52, 53 dienen vorzugsweise dem Transport der Transportkisten 50, insbesondere entlang der Lagerausgänge 17, 27, 37.

Die Transportspuren 51, 52, 53 sind vorzugsweise parallel zueinander angeordnet und/oder weisen insbesondere die gleiche Laufrichtung entlang der bzw. in Bezug auf die Lagerausgänge 17, 27, 37 auf.

Beim Darstellungsbeispiel sind die Transportspuren 51, 52, 53 als separate Transportbänder ausgebildet. Die Transportspuren 51, 52, 53 können jedoch auch als ein einziges (breites) Transportband oder in Form zweier Transportbänder, bspw. in Form eines schmalen und eines breiten Transportbandes, ausgebildet sein. Jedoch sind auch andere konstruktive Lösungen möglich.

Vorzugsweise sind die Transportspuren 51, 52, 53 bzw. Transportbänder über einen gemeinsamen Motor angetrieben. Es können statt einem Motor jedoch auch mehrere Motoren vorgesehen sein. Dies ermöglicht insbesondere den Betrieb der Transportbänder mit unterschiedlicher Geschwindigkeit.

Das System 1 weist vorzugsweise eine (dritte) Transportspur 53 auf, welche vornehmlich dazu dient, fertig beladene, insbesondere vollständig beladene Transportkisten 50 aus dem vorschlagsgemäßen System 1 herauszutransportieren bzw. auszuschleusen. Die Transportspur 53 kann jedoch auch als Überholspur für insbesondereteilbeladene Transportkisten 50 und/oder zum Ausschleusen von fehlerhaft bestückten Transportkisten 50 dienen.

Weiter weist das System 1 vorzugsweise eine (zweite) Transportspur 52 auf, auf welcher insbesondere leere und/oder teilbeladene Transportkisten 50 mit Gegenständen 2 beladen bzw. auf welcher vorzugsweise die zu einem Arbeitsauftrag 4 gehörenden Gegenstände 2 in der jeweiligem Transportkiste 50 zusammengestellt bzw. kommissioniert werden.

Zusätzlich weist das System 1 in einer bevorzugten Ausführungsform vorzugsweise eine (erste) Transportspur 51 auf, welche vorzugsweise zum Einschleusen insbesondere leerer Transportkisten 50 dient.

Beim Darstellungsbeispiel sind drei Transportspuren 51, 52, 53 vorgesehen, welche in Fig. 7 in Pfeilrichtung von links nach rechts laufen.

Unter "vollständig beladenen" Transportkisten 50 im Sinne der vorliegenden Erfindung ist insbesondere zu verstehen, dass die Transportkisten 50 mit allen Gegenständen 2, die zu einem Arbeitsauftrag 4 gehören, bestückt bzw. beladen sind. Insbesondere kann eine Transportkiste 50 auch vollständig beladen sein, auch wenn nicht alle in der Transportkiste 50 verfügbaren Aufnahmeplätze 50a belegt sind, je nachdem, wie viele Gegenstände 2 zu einem Arbeitsauftrag 4 gehören.

"Teilbeladen" im Sinne der vorliegenden Erfindung bedeutet insbesondere, dass die Transportkiste 50 (noch) nicht mit allen zu einem Arbeitsauftrag gehörenden Gegenständen 2 bestückt bzw. beladen ist. Beispielsweise kann ein Arbeitsauftrag 4 auch Gegenstände 2 umfassen, die in unterschiedlichen Lagereinheiten 10, 20, 30 gelagert sind. Dann wird in einem beispielhaften Szenario eine Transportkiste 50 zunächst mit Gegenständen 2 aus der Lagereinheit 10 beladen, im teilbeladenen Zustand auf der Transportspur 52 oder 53 zu der Lagereinheit 30 weitertransportiert und dort mit den restlichen zu demselben Arbeitsauftrag 4 gehörenden Gegenständen 2 beladen.

Wie in Fig. 4 und 7 zu sehen, weist das System 1 vorzugsweise an den Lagerausgängen 17, 27, 37, besonders bevorzugt an jedem Lagerausgang 17, 27, 37, eine Handhabungsvorrichtung 18, 28, 38 auf.

Vorzugsweise dienen die Handhabungsvorrichtungen 18, 28, 38 zum Bestücken von Transportkisten 50 mit Gegenständen 2 und/oder zum Transfer, insbesondere zum Schieben, der Transportkisten 50 von einer Transportspur 51, 52, 53 zur anderen.

Die Handhabungsvorrichtung 18, 28, 38 dient insbesondere dazu, auf den Sammelbändern 16, 26, 36 befindliche bzw. von diesen angelieferte Gegenstände 2 direkt und/oder aus den zugehörigen Lagerbehältern 3 aufzunehmen bzw. zu greifen und insbesondere arbeitsauftragsweise in Transportkisten 50 zu überführen. Zweckmäßigerweise weist die Handhabungsvorrichtung 18, 28, 38 besonders bevorzugt einen Manipulator (in Fig. 7 ist beispielhaft der Manipulator 28b der Handhabungseinrichtung 28 angedeutet) bzw. eine oder mehrere an sich bekannte Greifvorrichtungen zum Bestücken der Transportkisten 50 auf. In einer besonders bevorzugten Ausführungsform ist der Manipulator 18b, 28b, 38b als Sauger ausgebildet bzw. umfasst ein oder mehrere Sauger.

Das Aufnehmen bzw. Greifen der Gegenstände 2 vom Sammelband 16, 26, 36 bzw. aus den Lagerbehältern 3 durch die Handhabungsvorrichtung 18, 28, 38 bzw. deren Manipulator 18b, 28b, 38b erfolgt vorzugsweise einzelweise. Dies erlaubt wiederum ein definiertes bzw. geordnetes Ablegen der Gegenstände 2 in die jeweilige Transportkiste 50, insbesondere mit der gewünschten Positionierung und/oder Orientierung bzw. auf dem jeweiligen Ablageplatz 50a.

Weiter weist die Handhabungsvorrichtung 18, 28, 38 bzw. das System 1 optional mindestens eine Transfereinheit zum Transfer der Transportkisten 50 zwischen den Transportspuren 51, 52, 53 auf. Die Transfereinheit ist vorzugsweise als Schieber ausgebildet bzw. kann ein oder mehrere Schieber umfassen.

In einer besonders bevorzugten Ausführungsform umfasst die Transfereinheit mehrere, insbesondere zwei, Schieber vorzugsweise in Form von Gabeln, die die Transportkisten insbesondere quer zur Förderrichtung der Transportspuren 51, 52, 53 verschieben. Beispielsweise kann ein Schieber dazu dienen bzw. ausgebildet sein, leere Transportkisten 50 von der ersten Transportspur 51 auf die zweite Transportspur 52 zu schieben, während ein anderer Schieber dazu dient, mit Gegenständen 2 beladene Transportkisten 50 von der zweiten Transportspur 52 auf die dritte Transportspur 53 zu schieben.

Optional weist die Handhabungseinrichtung 18, 28, 38 bzw. das System 1 oder die Transfereinheit zusätzlich einen Schieber auf, der insbesondere dazu dient, teilbeladene Transportkisten 50 von der insbesondere als Überholspur ausgebildeten bzw. dritten Transportspur 53 auf die Transportspur 52 zu schieben.

Weiter weist das System 1 bzw. die Handhabungsvorrichtung 18, 28, 38 vorzugsweise ein oder mehrere Transfereinheiten bzw. Schieber, besonders bevorzugt in Form von Stempeln, zum Ausschleusen insbesondere leerer Lagerbehälter 3, insbesondere auf ein Rücklaufband 54, auf.

Weiter weist das System 1 vorzugsweise das Rücklaufband 54 auf. Dieses dient insbesondere zum Ausschleusen bzw. Rücktransport von insbesondere leeren Lagerbehältern 3, besonders bevorzugt zu den Vorratsbehältern 44, 45 und/oder den Packstationen 40, 41.

Vorzugsweise ist das Rücklaufband 54 oberhalb der Transportspuren 51, 52, 53 bzw. auf Höhe der Sammelbänder 16, 26, 36 angeordnet.

Die Förderrichtung des Rücklaufbandes 54 ist vorzugsweise entgegengesetzt zur Förderrichtung der Transportspuren 51, 52, 53. Hier sind jedoch auch andere konstruktive Lösungen möglich.

In einer bevorzugten Ausführungsform weist das System 1 optional zusätzlich Bandabschnitte 18a (nicht dargestellt), 28a, 38a auf, die insbesondere einer Zwischenspeicherung leerer Lagerbehälter 3 dienen. Diese Abschnitte können, wie in Fig. 7 dargestellt, parallel zum Rücklaufband 54, alternativ jedoch auch quer zum Rücklaufband 54 bzw. parallel und/oder angrenzend zum Sammelband 16, 26, 36 angeordnet sein bzw. verlaufen.

Nach dem Bestücken einer Transportkiste 50 mit Gegenständen 2 durch die Handhabungseinrichtung 18, 28, 38 wird der leere Lagerbehälter 3 von der Handhabungsvorrichtung 18, 28, 38 bzw. der Transfereinheit vorzugsweise auf den Bandabschnitt 18a, 28a, 38a transferiert bzw. geschoben. Von dort aus kann der leere Lagerbehälter 3 auf das Rücklaufband 54 transferiert bzw. geschoben werden.

Alternativ oder zusätzlich bzw. grundsätzlich kann der leere Lagerbehälter 3 vom Sammelband 16, 26, 36 auch direkt auf das Rücklaufband 54 gefördert bzw. geschoben werden.

Falls das Rücklaufband 54, insbesondere im Bereich der Handhabungsvorrichtung 18, 28, 38, jedoch bereits von einem Lagerbehälter 3 besetzt sein sollte, kann der betreffende leere Lagerbehälter 3, insbesondere mittels der Handhabungsvorrichtung 18, 28, 38, vom Sammelband 16, 26, 36 auf einen Bandabschnitt 18a, 28a, 38a überführt bzw. geschoben werden, insbesondere derart, dass der leere Lagerbehälter 3 auf dem jeweiligen Bandabschnitt 18a, 28a, 38a vorzugsweise parallel zum Rücklaufband 54 mitlaufen kann. Vorzugsweise kann der leere Lagerbehälter 3 anschließend mittels eines an sich bekannten Schiebers auf einen freien Platz auf dem Rücklaufband 54 geschoben werden.

Über das Rücklaufband 54 werden die leeren Lagerbehälter 3, insbesondere zu den Packstationen 40, 41 und/oder Vorratsbehältern 44, 45, abtransportiert und vorzugsweise zum Beladen mit neuen bzw. zu lagernden und/oder kommissionierenden Gegenständen 2 zur Verfügung gestellt.

Die Handhabungsvorrichtungen 18, 28, 38 weisen vorzugsweise jeweils einen Manipulator 18b, 28b, 38b (in Fig. 7 ist aus Vereinfachungsgründen nur die Handhabungsvorrichtung 28 mit ihrem Manipulator 28b sehr schematisch gezeigt) zum vorzugsweise einzelweisen Aufnehmen, insbesondere Greifen, eines Gegenstands 2, um diesen in eine gewünschte Transportkiste 50 abzulegen bzw. umzuladen und insbesondere den Gegenstand 2 auf dem gewünschten Aufnahmeplatz 50a in der Transportkiste zu positionieren, also definiert abzulegen.

Die Handhabungsvorrichtungen 18, 28, 38 bzw. deren Manipulator 18b, 28b, 38b sind vorzugsweise über den Sammelbändern 16, 26, 36 und/oder Transportspuren 51, 52, 53 angeordnet und/oder längs der und insbesondere auch quer zu der Förderrichtung der Transportskisten 50 bzw. zu den Transportspuren 51, 52, 53 bewegbar, um die Gegenstände 2 in ihren jeweiligen Position I bis IV aufnehmen und gewünscht an einem Ablageplatz 50a der Transportkiste 50 ablegen zu können.

Der Handhabungsvorrichtung 18, 28, 38 bzw. den Transportspuren 51, 52, 53 sind vorzugsweise verschiedene Bereiche B für die Transportkisten 50 zugordnet. Dies wird nachfolgend beispielhaft anhand von Fig. 7 insbesondere bezüglich der Handhabungsvorrichtung 28 näher erläutert. In Fig. 7 ist die Handhabungsvorrichtung 28 nur gestrichelt angedeutet und sind die andere Handhabungsvorrichtungen 18, 38 zur besseren Übersichtlichkeit weggelassen, auch wenn diesbezüglich Entsprechendes gilt.

Das System 1 bzw. die Handhabungseinrichtung 28 weist vorzugsweise einen Bereich B1 auf, in welchem mittels der Transfereinheit bzw. eines Schiebers eine leere Transportkiste 50 von der ersten Transportspur 51 auf die zweite Transportspur 52 geschoben werden kann. B1 liegt vorzugsweise stromauf bzw. vor und/oder unter der jeweiligen Handhabungsvorrichtung 28 bzw. dem jeweiligen Sammelband 26 bzw. Lagerausgang 27.

Weiter ist vorzugsweise ein Bereich B2 vorgesehen, welcher insbesondere als Wartebereich für vorzugsweise leere oder teilbeladene Transportkisten 50 vor dem (weiteren) Beladen mit Gegenständen 2 fungiert. B2 schließt sich vorzugsweise an B1 an und/oder bezieht sich insbesondere auf die zweite Transportspur 52 und/oder erstreckt sich vorzugsweise unter dem jeweiligen Sammelband 26 hindurch und/oder über dieses bzw. den jeweiligen Lagerausgang 27 hinaus in Förderrichtung.

Zusätzlich weist das System 1 bzw. die Handhabungseinrichtung 28 vorzugsweise einen Bereich B3 auf, in welchem das Beladen der Transportkisten 50 mit Gegenständen 2 erfolgt, insbesondere mittels des jeweiligen Manipulators 28b der jeweiligen Handhabungseinrichtung 28. B3 schließt sich vorzugsweise an B2 an und/oder bezieht sich insbesondere auf die zweite Transportspur 52.

Ein weiterer optionaler Bereich B4 schließt sich vorzugsweise an B3 an und/oder dient vorzugsweise als Wartebereich für vollständig und/oder teilbeladene Transportkisten 50.

Weiter weist das System 1 bzw. die jeweilige Handhabungseinrichtung 28 vorzugsweise einen Bereich B5 auf, in dem der Transfer vollständig und/oder teilbeladener Transportkisten 50 auf die dritte Transportspur 53 zum Ausschleusen aus dem System 1 erfolgen kann.

An oder vor den Lagerausgängen 17, 27, 37 bzw. in den Bereichen B1 wird vorzugsweise jeweils eine gewisse Anzahl leerer Transportkisten 50 insbesondere von der ersten Transportspur 51 auf die zweite Transportspur 52 geschoben bzw. transferiert und dort vorzugsweise im Bereich B2 bzw. im Wartebereich vorgehalten.

Da im Ausführungsbeispiel drei Transportspuren 51, 52, 53 vorgesehen sind, gibt es vorschlagsgemäß mehrere Szenarien bzw. Abläufe zur Beladung der Transportkisten 50.

In einem ersten, bevorzugten Szenario bzw. Ablauf wird eine Transportkiste 50 auf der Transportspur 52 aus dem Bereich B2 bzw. dem Wartebereich zu einem Lagerausgang 17, 27, 37 und/oder in den Bereich B3 transportiert und dort insbesondere vollständig bzw. mit allen nachgefragten, zu ein und demselben Arbeitsvorgang gehörigen Gegenständen 2 beladen. Im Anschluss wird die Transportkiste 50 auf der Transportspur 52 in einen weiteren Wartebereich bzw. den Bereich B4 transportiert und anschließend bzw. im Bereich B5 mittels der Transfereinheit bzw. eines Schiebers der Handhabungsvorrichtung 18, 28, 38 auf einen freien Platz auf der Transportspur 53 geschoben bzw. transferiert und über die Transportspur 53 aus dem System 1 ausgeschleust.

In einem zweiten Szenario bzw. Ablauf wird eine Transportkiste 50 an mehreren Lagerausgängen 17, 27 oder 27, 37 oder 17, 27, 37 beladen, d. h. sie braucht zwei oder drei verschiedene und/oder hintereinander liegende oder auch beabstandete Lagerausgänge, um vollständig bzw. mit allen zu einem Arbeitsauftrag 4 gehörenden Gegenständen 2 beladen zu werden. In diesem Fall wird eine teilbeladene bzw. nicht vollständig beladene Transportkiste 50 vorzugsweise auf der zweiten bzw. mittleren Transportspur 52 zum unmittelbar folgenden Lagerausgang 27, 37 transportiert und dort, wie oben beschrieben, beladen. Schließlich wird die vollständig beladene Transportkiste 50, wie bereits beschrieben, insebsondere im entprechenden Bereich B5 auf das Transportband 53 geschoben bzw. transferiert und aus dem vorschlagsgemäßen System 1 heraustransportiert bzw. ausgeschleust.

In einem dritten Szenario bzw. Ablauf wird eine Transportkiste 50 an bzw. vor mehreren Lagerausgängen 17, 37 beladen, wobei mindestens ein Lagerausgang 27 dazwischenliegt bzw. übersprungen wird. In diesem Fall wird die von dem Lagerausgang 17 unvollständig beladene Transportkiste 50 auf die erste Transportspur 51 oder die dritte Transportspur 53 geschoben bzw. transferiert und von dieser bis zum Bereich B1 der Handhabungsvorrichtung 38 bzw. bis vor den Lagerausgang 37 transportiert, wo sie wieder auf die mittlere bzw. der Beladung dienende Transportspur 52 geschoben wird. Dann erfolgt die vollständige Beladung und das Ausschleusen der Transportkiste 50 aus dem System 1 wie beschrieben.

In einem vierten Szenario bzw. Ablauf sollen zwei Linsenrohlinge mit einem sog. "customer frame", d. h. einer individuellen, bspw. von einem Optiker zugeschickten Brillenfassung kombiniert werden. Theoretisch könnte man die Linsenrohlinge mit Ausnahme des Edgings fertig bearbeiten und lagern, bis die Brillenfassung vorliegt. Es ist jedoch bevorzugt, die Herstellung der Brille erst dann zu beginnen, wenn die Brillenfassung vorliegt. Diese wird dann beispielsweise manuell in einer Transportkiste 50 abgelegt, und die Transportkiste 50 wird wie eine unvollständig beladene Transportkiste 50 behandelt, wie oben für das zweite und dritte Szenario beschrieben. Nach dem automatisierten vollständigen Beladen, insbesondere mit den Linsenrohlingen, kann auch diese Transportkiste 50 wie beschrieben ausgeschleust bzw. abgegeben werden.

Wie in den Figuren 1 und 2 dargestellt, können die Transportkisten 50, insbesondere während sie aus dem System 1 heraustransportiert werden, optional noch ein Lesegerät 48 und/oder einen Drucker 49 passieren.

Das Lesegerät 48 dient vorzugsweise dazu, ein insbesondere in der Transportkiste 50 integriertes Speichermedium, wie einen RFID-Chip, auszulesen, insbesondere derart, dass der darin aufgenommene bzw. zugehörige Arbeitsauftrag identifiziert wird.

Der Drucker 49 dient insbesondere zum Drucken eines sogenannten "Jobtickets" bzw. eines Tickets, welches zur Kennzeichnung eines Arbeitsauftrags dient. In einer bevorzugten Ausführungsform ist der Drucker 49 ein Kombigerät, vorzugsweise umfassend einen Drucker, eine Falzmaschine und/oder eine Handhabe, welches insbesondere ein "Jobticket" mit den Einzelheiten des jeweiligen Arbeitsauftrags ausdruckt, dieses faltet und/oder in die Transportkiste 50 einlegt.

Optional können Lesegerät 48 und Drucker 49 auch in einem einzigen Gerät integriert bzw. kombiniert sein.

Ferner können auch zwei oder mehr Drucker 49 und/oder Lesegeräte 48 vorhanden sein, insbesondere um die Redundanz zu verbessern.

Wie in Fig. 1 zu sehen, weist das System 1 vorzugsweise ein Warte- bzw. Ausschleusband 55 auf. Dieses dient zum Ausschleusen von insbesondere fehlerhaften bzw. fehlerhaft bestückten Transportkisten 50. Jedoch kann eine Transportkiste 50 auch einen Gegenstand 2 aufweisen, der doch nicht zu einem Arbeitsauftrag 4 gehört bzw. gehören soll. In diesem Fall dient das Ausschleusband 55 optional einer Zwischenlagerung bzw. -speicherung, insbesondere wenn eine spätere Rückförderung dieser Transportkiste 50 zu einer Handhabungsvorrichtung 18, 28, 38 zur weiteren Beladung möglich ist.

Vorzugsweise ist das Ausschleusband 55 hinter den Lagereinheiten 10, 20, 30 und/oder hinter bzw. am Ende der Transportspuren 51, 52, 53 angeordnet. Alternativ oder zusätzlich ist das Ausschleusband 55 hinter dem Drucker 49 angeordnet. Dies ermöglicht das Ausschleusen von Transportkisten 50 mit fehlerhaft hergestellten bzw. gedruckten "Jobtickets".

Das Ausschleusband 55 zweigt vorzugsweise von der einer Ausgabe oder Abgabe beladener Transportkisten 50 dienenden bzw. dritten Transportspur 53 ab oder verläuft parallel zu dieser.

Optional weist das System 1 - insbesondere alternativ oder zusätzlich zum Ausschleusband 55 - einen Zwischenspeicher 9 für insbesondere vollständig beladene, ggf. aber auch teilbeladene Transportkisten 50 auf, wie in Fig. 1 angedeutet.

Optional weist das System 1 - insbesondere alternativ oder zusätzlich zum Zwischenspeicher 9 - einen Kistenspeicher 8 für leere, ggf. aber auch teilbeladene Transportkisten 50 auf. Insbesondere können die leeren Transportkisten 50 vom Kistenspeicher 8 an bzw. über die (erste) Transportspur 51 abgegeben oder ausgegeben werden.

Zweckmäßigerweise erfolgt das Zwischenlagern oder Speichern bzw. Vorhalten von Transportkisten 50 stapelweise bzw. in Form von Stapeln, wie insbesondere in Fig. 2 und 3 zu sehen.

Optional weist das System 1 einen Behälterpeicher 7 für leere, ggf. aber auch beladene und/oder fehlerhafte Lagerbehälter 3 auf. Der Behälterspeicher 7 ist vorzugsweise an das Rücklaufband 54 angeschlossen und/oder in der Rückförderung stromauf der Packstation 40, 41 bzw. des Vorratsbehälters 44, 45 angeordnet.

Vorzugsweise erfolgt das Entpacken von verpackten Gegenständen 2, wie in Kartonagen verpackten Linsenrohlingen oder in Plastikbeuteln verpackten Brillenfassungen, nach der insbesondere vollständigen Kommissionierung von zu einem Arbeitsauftrag 4 gehörenden Gegenständen 2, d.h. vorzugsweise nachdem die Transportkisten 50 mit allen zu dem Arbeitsauftrag 4 gehörenden Gegenständen 2 bestückt bzw. beladen worden sind, insbesondere nach Verlassen des Systems 1 bzw. Zwischenspeichers 9.

Das Entpacken kann manuell, insbesondere durch eine Bedienperson, und/oder automatisch, beispielweise durch Bearbeitungseinrichtungen, die zum Entpacken von Gegenständen 2 ausgebildet sind, erfolgen.

Besonders bevorzugt enthält eine einzige Transportkiste 50 alle zu einem bestimmten, also genau einem Arbeitsauftrag 4 gehörenden Gegenstände 2. Jedoch können optional auch zwei oder mehr Transportkisten 50 die zu einem bestimmten, also genau einem Arbeitsauftrag 4 gehörenden Gegenstände 2 enthalten.

Nach dem Heraustransportieren der insbesondere mit zu einem Arbeitsauftrag 4 gehörenden Gegenständen 2 bestückten Transportkisten 50 aus dem System 1 können die Transportkisten 50 zu einer Arbeitsposition transportiert bzw. an eine nicht dargestellte Bearbeitungsanlage oder -einrichtung weiter gefördert werden.

Bei der Arbeitsposition bzw. Bearbeitungsanlage kann es sich um Bearbeitungseinrichtungen, wie Blockvorrichtungen, Dreh- und/oder Fräsmaschinen, Poliermaschinen, Reinigungsmaschinen, Beschichtungsvorrichtungen und/oder sonstige Maschinen bzw. Geräte handeln, die insbesondere zur Herstellung einer Brille aus Linsenrohlingen und einer Brillenfassung dienen.

Die Transportkisten 50 können auch in ein sich selbst organisierendes System eingeschleust werden, wie bspw. in der EP 2 822 883 A1 beschrieben.

Im Ergebnis werden also ein System 1, ein Verfahren und eine Verwendung vorgeschlagen, mit denen beliebige insbesondere zu demselben Arbeitsauftrag 4 gehörende Gegenstände 2 vorzugsweise automatisch in ein und derselben Transportkiste 50 aufgenommen werden können, welche hochflexibel an Kundenwünsche anpassbar sind und die eine hohe Redundanz aufweisen, so dass bei Ausfall bspw. einer Lagereinrichtung 10, 20, 30 die verbleibenden Komponenten des vorschlagsgemäßen Systems 1 weiterarbeiten können.

Ein vorschlagsgemäßes Verfahren zeichnet sich vorzugsweise durch die folgenden Verfahrensschritte aus: Ablage gelagerter Gegenstände 2 auf mindestens einem Sammelband 16, 26, 36 derart, dass Gegenstände 2, die zu einem definierten Arbeitsauftrag 4 gehören, benachbart zueinander abgelegt werden, Transport der auf dem mindestens einen Sammelband 16, 26, 36 abgelegten Gegenstände 2 zum Lagerausgang 17, 27, 37, Beladen einer Transportkiste 50 mit den abgelegten Gegenständen 2, die zu einem definierten Arbeitsauftrag 4 gehören, sowie Heraustransport der beladenen Transportkiste 50 aus dem System 1.

Ein anderer, auch unabhängig realisierbarer Aspekt der vorliegenden Erfindung sieht vorzugsweise vor, dass Lagerbehälter 3 mit darin befindlichen Gegenständen 2 zunächst für einen Arbeitsauftrag 4 zusammengestellt werden und dann die Gegenstände 2 für den Arbeitsauftrag 4 aus den Lagerbehältern 3 in eine Transportkiste 50 umgeladen werden. Anschließend erfolgt dann vorzugsweise eine Rückförderung der Lagerbehälter 3 und Beladung bzw. Beschickung mit neuen Gegenständen 2 zur Einlagerung bzw. Zwischenlagerung.

Vorschlagsgemäß wird insbesondere eine automatisierte und optimierte Kommissionierung von Gegenständen 2 für die Brillenherstellung ermöglicht. Hierbei ist zu berücksichtigen, dass die jeweils für die Herstellung einer Brille erforderlichen Gegenstände 2, insbesondere Linsen bzw. Linsenrohlinge, aber auch ein Brillengestell, ein Werkzeug und/oder dergleichen, insbesondere definiert bzw. an bestimmten Positionen in einer Transportkiste 50 abgelegt und/oder mittels eines Lagerbehälters 3 bzw. einer Transportkiste 50 automatisiert ausgelagert oder abgegeben werden, um eine einfache automatisierte Brillenherstellung zu ermöglichen.

Mit dem vorschlagsgemäßen System 1 bzw. dem vorschlagsgemäßen Verfahren ist es (im Gegensatz zum Stand der Technik) möglich, zu lagernde Gegenstände 2 zwar an beliebigen Positionen innerhalb der Lagereinrichtung 10, 20, 30 zu lagern, gelagerte Gegenstände 2 aber gezielt so auszugeben, dass insbesondere zusammengehörige Gegenstände 2, d.h. Gegenstände 2, die zu demselben Arbeitsauftrag 4 gehören, auf einem Sammelband 16, 26, 36 zusammen, d. h. im Wesentlichen nebeneinander abzulegen, derart, dass sie nacheinander am Lagerausgang 17, 27, 37 erscheinen, so dass ein und dieselbe Transportkiste 50 mit ihnen bestückt werden kann. Mit anderen Worten: Die gelagerten Gegenstände 2 werden vorzugsweise nicht in der Reihenfolge ihrer Bestellung bzw. Abfrage, sondern nach dem jeweiligen Arbeitsauftrag 4 geordnet abgegeben.

Derartige Arbeitsaufträge 4 sind typischerweise Herstellungs- bzw. Montageaufträge, wobei die gelagerten, zu einem Arbeitsauftrag 4 gehörenden Gegenstände 2 auch Betriebsmittel, Werkzeuge und sontige Komponenten für die Herstellung bzw. Montage eines Zwischenprodukts oder Endproduktes sein können. Optional können die Gegenstände 2, beispielsweise Werkzeuge, auch für die Herstellung mehrerer Brillen, also für mehrere Arbeitsaufträge 4 einsetzbar sein bzw. kommissioniert bzw. ausgegeben werden.

Eine besonders bevorzugte Anwendung bzw. Verwendung des vorschlagsgemäßen Systems bzw. des vorschlagsgemäßen Verfahrens bezieht sich auf die optische Industrie, insbesondere die Herstellung von Brillen. Hierzu werden typischerweise zwei Linsenrohlinge, ggf. unterschiedlicher Verarbeitungsstufen, eine dazugehörige Brillenfassung und/oder ein oder mehrere Blockstücke kombiniert, die zu dem gleichen Arbeitsauftrag 4, beispielsweise für eine insbesondere individuell spezifizierte Brille, gehören.

### Bezugszeichenliste

| | | | |
|---|---|---|---|
| 1 | System | 18, 28, 38 | Handhabungsvorrichtung |
| 2 | Gegenstand | 18a, 28a, 38a | Bandabschnitt |
| 2a | Kennzeichnung | 18b, 28b, 38b | Manipulator |
| 3 | Lagerbehälter | 19, 29, 39 | Ablageplatz |
| 3a | Speichermedium | 40, 41 | Packstation |
| 4 | Arbeitsauftrag | 42, 43 | Verpackungseinheit |
| 5 | Lagerregal | 44, 45 | Vorratsbehälter |
| 6 | Handhabungseinrichtung | 46 | Laufband |
| 6a | Manipulator | 48 | Lesegerät |
| 7 | Behälterspeicher | 49 | Drucker |
| 8 | Kistenspeicher | 50 | Transportkiste |
| 9 | Zwischenspeicher | 50a | Aufnahmeplatz |
| 10, 20, 30 | Lagereinheiten | 51, 52, 53 | Transportspur |
| 11, 31 | Beladeeinrichtung | 54 | Rücklaufband |
| 12, 32 | Laufband | 55 | Ausschleusband |
| 13, 23, 33 | Einlagereinrichtung | 56 | Pufferzone |
| 14, 24, 34 | Leseeinrichtung | 103, 203, 303 | Lagereingang |
| 15, 25, 35 | Einlagerband | B1 - B5 | Bereich |
| 16, 26, 36 | Sammelband | I, II, III, IV | Ablageposition |
| 17, 27, 37 | Lagerausgang | | |

## Patentansprüche

1. System (1) zum Transport und zur Lagerung von Gegenständen (2), mit mindestens zwei Lagereinrichtungen (10, 20, 30) umfassend Lagerregale (5), mindestens einen Lagereingang (103, 203, 303) und mindestens einen Lagerausgang (17, 27, 37) sowie mindestens eine(r) Handhabungseinrichtung (6) für zu lagernde Gegenstände (2), wobei- jede Lagereinrichtung (10, 20, 30) bzw. die Lagereinrichtungen (10, 20, 30) mindestens ein Sammelband (16, 26, 36) aufweist bzw. aufweisen, welches sich entlang der Lagerregale (5) erstreckt und in den Lagerausgang (17, 27, 37) mündet,
- mindestens eine Transportspur (51, 52, 53) für Transportkisten (50) sich entlang der Lagerausgänge (17, 27, 37) erstreckt,
- eine Handhabungsvorrichtung (18, 28, 38) den Lagerausgängen (17, 27, 37) zugeordnet bzw. an jedem Lagerausgang (17, 27, 37) vorgesehen ist, die geeignet ist, eine Transportkiste (50) mit auf dem jeweiligen Sammelband (16, 26, 36) bzw. auf den Sammelbändern (16, 26, 36) befindlichen lagerbaren bzw. gelagerten Gegenständen (2) zu beladen,
- derart, dass abschließend jede Transportkiste (50) geeignet ist lagernde bzw. gelagerte Gegenstände (2) zu enthalten, die zu genau einem definierten Arbeitsauftrag (4) gehören,
**dadurch gekennzeichnet,**
**dass** die Handhabungseinrichtung (6) zum Greifen von Gegenständen (2) bzw. von Lagerbehältern (3) mit den Gegenständen (2) von seinem jeweiligen Lagerplatz bzw. aus dem jeweiligen Lagerregal (5) und zum definierten Ablegen bzw. Positionieren von Gegenständen (2) bzw. von Lagerbehältern (3) mit den Gegenständen (2) auf dem jeweiligen Sammelband (16, 26, 36), insbesondere auf einem dortigen Ablageplatz (19, 29, 39), ausgebildet ist.

2. System nach einem der vorhergehenden Patentansprüche, **dadurch gekennzeichnet, dass** das mindestens eine Sammelband (16, 26, 36) derart ausgebildet und/oder gesteuert ist, um zu lagernde bzw. gelagerte Gegenstände (2), die zu einem definierten Arbeitsauftrag (4) gehören, zusammen zum Lagerausgang (17, 27, 37) zu transportieren vorzugsweise wobei das mindestens eine Sammelband (16, 26, 36) getaktet gesteuert ist.

3. System nach einem der vorhergehenden Patentansprüche, **dadurch gekennzeichnet, dass** mindestens zwei, vorzugsweise drei Transportspuren (51, 52, 53) für Transportkisten (50) vorgesehen sind, und/oder
dass mindestens zwei Transportspuren (51, 52, 53) bzw. das System (1) derart ausgebildet sind bzw. ist, dass Transportkisten (50) zwischen den mindestens zwei Transportspuren (51, 52, 53) wechseln können bzw. verschiebbar sind.

4. System nach einem der vorhergehenden Patentansprüche, **dadurch gekennzeichnet, dass** Sammelbänder (16, 26, 36) und Lagerregale (5) parallel zueinander und die mindestens eine Transportspur (51, 52, 53) quer bzw. senkrecht dazu verlaufen bzw. angeordnet sind.

5. System nach einem der vorhergehenden Patentansprüche, **dadurch gekennzeichnet, dass** zumindest ein Teil der zu lagernden Gegenstände (2) in Lagerbehältern (3) aufgenommen bzw. aufnehmbar sind.

6. System nach Patentanspruch 4, **dadurch gekennzeichnet, dass** die Lagerbehälter (3) mit einem auslesbaren Speichermedium (3a), vorzugsweise einem RFID-Chip, versehen sind.

7. System nach einem der vorhergehenden Patentansprüche, **dadurch gekennzeichnet, dass** mindestens ein Lesegerät (48) vorgesehen ist, welches geeignet ist, ein auslesbares Speichermedium (3a), insbesondere an einem Lagerbehälter (3) oder einer Transportkiste (50), und/oder eine auf dem lagerbaren Gegenstand (2) bzw. seiner Verpackung befindliche Kennzeichnung (2a) auszulesen, vorzugsweise um die Gegenstände (2) zu identifizieren bzw. die für den Arbeitsauftrag (4) gewünschte Beladung einer Transportkiste (50) sicherstellen oder überprüfen zu können.

8. System nach den Patentansprüchen 6 und 7, **dadurch gekennzeichnet, dass** das Speichermedium (3a) mittels des Lesegerätes (48) auslesbar ist.

9. System nach einem der Patentansprüche 5 bis 8, **dadurch gekennzeichnet, dass** mindestens ein Rücklaufband (54) für Lagerbehälter (3) vorgesehen ist, insbesondere zur Rückführung leerer Lagerbehälter (3) zur einer Packstation (40, 41) des Systems (1) zur Befüllung der Lagerbehälter (3) mit zu lagernden Gegenständen (2).

10. System nach einem der vorhergehenden Patentansprüche, **dadurch gekennzeichnet, dass** die Handhabungsvorrichtung (18, 28, 38) zum einzelweisen Aufnehmen der Gegenstände (2) vom jeweiligen Sammelband (16, 26, 36), Ablagebeplatz (19, 29, 39) und/oder Lagerbehälter (3) und definierten bzw. einzelweisen Ablegen in der Transportkiste (50) ausgebildet ist.

11. Verfahren zur Ausgabe bzw. zum Kommissionieren von gelagerten Gegenständen (2) mittels eines Systems (1) nach einem der voranstehenden Ansprüche,
aufweisend folgende Verfahrensschritte:
a) Einlagern oder Zwischenlagern der Gegenstände (2) insbesondere einzelweise in Lagerbehältern (3);
b) Zusammenstellen von mehreren Gegenständen (2) für einen Arbeitsauftrag (4);
c) Umladen der Gegenstände (2) für den Arbeitsauftrag (4) aus den Lagerbehältern (3) in eine Transportkiste (50);
d) Rückförderung der Lagerbehälter (3) und Beschickung mit neuen Gegenständen (2) zur Einlagerung bzw. Zwischenlagerung gemäß Schritt a),
**dadurch gekennzeichnet,**
**dass** die Gegenstände (2) eines Arbeitsauftrags (4) auf definierten Positionen bzw. Ablageplätzen (50a) in der jeweiligen Transportkiste (50) abgelegt werden.

12. Verfahren nach Patentanspruch 11, **dadurch gekennzeichnet, dass** in Schritt b) das Zusammenstellen der in Lagerbehältern (3) gelagerten Gegenstände (2) auf einem Sammelband (16, 26, 36) und/oder Ablageplatz (19, 29, 39) erfolgt, indem mindestens ein Lagerbehälter (3) mit einem darin aufgenommenen gelagerten Gegenstand (3) auf dem Sammelband (16, 26, 36) bzw. dem Ablageplatz (19, 29, 39) abgelegt wird.

13. Verfahren nach Patentanspruch 11 oder 12, **dadurch gekennzeichnet, dass** die Transportkiste (50) nacheinander an verschiedenen Lagerausgängen (17, 27, 37) und/oder über verschiedene Sammelbänder (16, 26, 36) bzw. Handhabungsvorrichtungen (18, 28, 38) mit den Gegenständen (2) eines Arbeitsauftrags (4) beschickt bzw. beladen wird.

14. Verfahren nach einem der Patentansprüche 11 bis 13, **dadurch gekennzeichnet, dass** Transportkisten (50) und leere Lagerbehälter (3) im Bereich von Lagerausgängen (17, 27, 37) bzw. von Handhabungsvorrichtungen (18, 28, 38) in entgegengesetzten Richtungen weitergefördert werden.

15. Verwendung eines Systems (1) gemäß einem der Ansprüche 1 bis 10 und/oder eines Verfahrens gemäß einem der Ansprüche 11 bis 14 zum Kommissionieren von Gegenständen (2) für Arbeitsaufträge (4) zur Herstellung von Brillen (2), wobei mindestens zwei Linsen bzw. Linsenrohlinge, eine Brillenfassung und/oder ein Werkzeug zur Bearbeitung ophthalmischer Linsen in die Transportkiste (50) für einen Arbeitsauftrag (4) mittels einer Handhabungsvorrichtung (18, 28, 38) bzw. automatisiert abgelegt wird bzw. werden.

## Claims

1. System (1) for transporting and storing objects (2), having at least two storage devices (10, 20, 30) comprising storage shelves (5), at least one storage inlet (103, 203, 303) and at least one storage outlet (17, 27, 37), as well as at least one handling device (6) for objects (2) to be stored,
wherein
- each storage device (10, 20, 30) or the storage devices (10, 20, 30) has or have at least one collecting conveyor (16, 26, 36) which extends along the storage shelves (5) and opens into the storage outlet (17, 27, 37),
- at least one transport track (51, 52, 53) for transport boxes (50) extends along the storage outlets (17, 27, 37),
- a handling apparatus (18, 28, 38) is assigned to the storage outlets (17, 27, 37) and/or is provided at each storage outlet (17, 27, 37) and is suitable for loading a transport box (50) with storable or stored objects (2) located on the respective collecting conveyor (16, 26, 36) or on the collecting conveyors (16, 26, 36),
- in such a way that each transport box (50) finally is suitable for containing objects (2) to be stored or stored which belong to exactly one defined work order (4),
**characterized**
**in that** the handling device (6) is designed for gripping objects (2) and/or storage containers (3) with the objects (2) from its respective storage location and/or from the respective storage shelf (5) and for the defined depositing and/or positioning of objects (2) and/or of storage containers (3) with the objects (2) on the respective collecting conveyor (16, 26, 36), in particular on a depositing location (19, 29, 39) located there.

2. System according to one of the preceding claims, **characterized in that** the at least one collecting conveyor (16, 26, 36) is designed and/or controlled in such a way as to transport objects (2) to be stored or stored which belong to a defined work order (4) together to the storage outlet (17, 27, 37), preferably wherein the at least one collecting conveyor (16, 26, 36) is clocked-controlled.

3. System according to one of the preceding claims, **characterized in that** at least two, preferably three transport tracks (51, 52, 53) are provided for transport boxes (50), and/or
**in that** at least two transport tracks (51, 52, 53) or the system (1) are or is designed in such a way that transport boxes (50) can change and/or be moved between the at least two transport tracks (51, 52, 53).

4. System according to one of the preceding claims, **characterized in that** collecting conveyors (16, 26, 36) and storage shelves (5) run and/or are arranged parallel to one another and the at least one transport track (51, 52, 53) runs and/or is arranged transversely or perpendicularly thereto.

5. System according to one of the preceding claims, **characterized in that** at least a part of the objects (2) to be stored are received or receivable in storage containers (3).

6. System according to claim 4 **characterized in that** the storage containers (3) are provided with a readable storage medium (3a), preferably an RFID chip.

7. System according to one of the preceding claims, **characterized in that** at least one reader (48) is provided which is suitable for reading a readable storage medium (3a), in particular on a storage container (3) or a transport box (50), and/or an identification (2a) located on the storable object (2) or its packaging, preferably in order to identify the objects (2) and/or to be able to ensure or check the loading of a transport box (50) desired for the work order (4).

8. System according to claims 6 and 7, **characterized in that** the storage medium (3a) can be read out by means of the reader (48).

9. System according to one of claims 5 to 8, **characterized in that** at least one return conveyor (54) for storage containers (3) is provided, in particular for returning empty storage containers (3) to a packing station (40, 41) of the system (1) for filling the storage containers (3) with objects (2) to be stored.

10. System according to one of the preceding claims, **characterized in that** the handling apparatus (18, 28, 38) is designed for individually picking up the objects (2) from the respective collecting conveyor (16, 26, 36), depositing location (19, 29, 39) and/or storage container (3) and for depositing them in a defined manner and/or individually in the transport box (50).

11. Method for outputting and/or picking stored objects (2) by means of a system (1) according to one of the preceding claims,
comprising the following method steps:
a) Storaging or intermediate storaging of the objects (2), in particular individually in storage containers (3);
b) Assembling multiple objects (2) for a work order (4);
c) Transferring the objects (2) for the work order (4) from the storage containers (3) into a transport box (50);
d) Returning the storage containers (3) and loading them with new objects (2) for storaging or temporary storaging according to step a),
**characterized**
**in that** the objects (2) of a work order (4) are deposited in defined positions and/or deposit locations (50a) in the respective transport box (50).

12. Method according to claim 11, **characterized in that** in step b) the assembly of the objects (2) stored in storage containers (3) is carried out on a collecting conveyor (16, 26, 36) and/or depositing location (19, 29, 39) by depositing at least one storage container (3) with a stored object (3) received therein on the collecting conveyor (16, 26, 36) and/or the depositing location (19, 29, 39).

13. Method according to claim 11 or 12, **characterized in that** the transport box (50) is successively loaded or charged with the objects (2) of a work order (4) at different storage outlets (17, 27, 37) and/or via different collecting conveyors (16, 26, 36) and/or handling apparatuses (18, 28, 38).

14. Method according to one of claims 11 to 13, **characterized in that** transport boxes (50) and empty storage containers (3) are conveyed further in opposite directions in the area of storage outlets (17, 27, 37) and/or handling apparatuses (18, 28, 38).

15. Use of a system (1) according to any one of claims 1 to 10 and/or of a method according to any one of claims 11 to 14 for picking objects (2) for work orders (4) for the manufacture of spectacles (2), wherein at least two lenses or lens blanks, a spectacle frame and/or a tool for processing ophthalmic lenses is/are deposited in the transport box (50) for a work order (4) by means of a handling apparatus (18, 28, 38) and/or in an automated manner.

## Revendications

1. Système (1) pour le transport et le stockage d'objets (2), comprenant au moins deux dispositifs de stockage (10, 20, 30) comprenant des rayonnages de stockage (5), au moins une entrée de stockage (103, 203, 303) et au moins une sortie de stockage (17, 27, 37) ainsi qu'au moins un dispositif de manipulation (6) pour des objets (2) à stocker,
dans lequel
- chaque dispositif de stockage (10, 20, 30) ou les dispositifs de stockage (10, 20, 30) présente ou présentent au moins une bande collectrice (16, 26, 36) qui s'étend le long des rayonnages de stockage (5) et débouche dans la sortie de stockage (17, 27, 37),
- au moins une voie de transport (51, 52, 53) pour des caisses de transport (50) s'étend le long des sorties de stockage (17, 27, 37),
- un appareil de manipulation (18, 28, 38) est associé aux sorties de stockage (17, 27, 37) et/ou est prévu à chaque sortie de stockage (17, 27, 37), qui est approprié pour charger une caisse de transport (50) avec des objets (2) stockés ou pouvant être stockés se trouvant sur la bande collectrice (16, 26, 36) respective ou sur les bandes collectrices (16, 26, 36),
- de telle sorte que finalement chaque caisse de transport (50) est appropriée pour contenir des objets (2) à stocker ou stockés, qui appartiennent exactement à un ordre de travail (4) défini,
**caractérisé**
**en ce que** le dispositif de manipulation (6) est conçu pour saisir des objets (2) et/ou des récipients de stockage (3) avec les objets (2) à partir de son emplacement de stockage respectif et/ou à partir du rayonnage de stockage (5) respectif et pour déposer et/ou positionner de manière définie des objets (2) et/ou des récipients de stockage (3) avec les objets (2) sur la bande collectrice (16, 26, 36) respective, en particulier sur un emplacement de dépôt (19, 29, 39) situé à cet endroit.

2. Système selon l'une quelconque des revendications précédentes, **caractérisé en ce que** l'au moins une bande collectrice (16, 26, 36) est conçue et/ou commandée de manière à transporter ensemble des objets (2) à stocker ou stockés, qui appartiennent à un ordre de travail (4) défini, vers la sortie de stockage (17, 27, 37), de préférence l'au moins une bande collectrice (16, 26, 36) étant commandée de manière cadencée.

3. Système selon l'une quelconque des revendications précédentes, **caractérisé en ce qu'**au moins deux, de préférence trois, voies de transport (51, 52, 53) sont prévues pour des caisses de transport (50), et/ou
**en ce qu'**au moins deux voies de transport (51, 52, 53) ou le système (1) est ou sont conçus de telle sorte que des caisses de transport (50) peuvent être échangées ou peuvent être déplacées entre les au moins deux voies de transport (51, 52, 53).

4. Système selon l'une quelconque des revendications précédentes, **caractérisé en ce que** des bandes collectrices (16, 26, 36) et des rayonnages de stockage (5) s'étendent et/ou sont disposés parallèlement les uns aux autres et l'au moins une voie de transport (51, 52, 53) s'étend et/ou est disposée transversalement ou perpendiculairement à celles-ci.

5. Système selon l'une quelconque des revendications précédentes, **caractérisé en ce qu'**au moins une partie des objets (2) à stocker sont reçus ou peuvent être reçus dans des récipients de stockage (3).

6. Système selon la revendication 4, **caractérisé en ce que** les récipients de stockage (3) sont pourvus d'un support de stockage (3a) lisible, de préférence d'une puce RFID.

7. Système selon l'une quelconque des revendications précédentes, **caractérisé en ce qu'**au moins un appareil de lecture (48) est prévu, qui est approprié pour lire un support de stockage (3a) lisible, en particulier sur un récipient de stockage (3) ou une caisse de transport (50), et/ou un marquage (2a) se trouvant sur l'objet (2) stockable ou son emballage, afin d'identifier les objets (2) et/ou de pouvoir garantir ou vérifier le chargement souhaité pour l'ordre de travail (4) d'une caisse de transport (50).

8. Système selon les revendications 6 et 7, **caractérisé en ce que** le support de stockage (3a) peut être lu au moyen de l'appareil de lecture (48).

9. Système selon l'une quelconque des revendications 5 à 8, **caractérisé en ce qu'**au moins une bande de retour (54) est prévue pour des récipients de stockage (3), en particulier pour le retour de récipients de stockage (3) vides vers une station d'emballage (40, 41) du système (1) pour le remplissage des récipients de stockage (3) avec des objets (2) à stocker.

10. Système selon l'une quelconque des revendications précédentes, **caractérisé en ce que** l'appareil de manipulation (18, 28, 38) est conçu pour recevoir individuellement les objets (2) à partir de la bande collectrice (16, 26, 36) respective, de l'emplacement de dépôt (19, 29, 39) et/ou des récipients de stockage (3) et pour les déposer de manière définie et/ou individuelle dans la caisse de transport (50).

11. Procédé de distribution et/ou de préparation de commandes d'objets (2) stockés au moyen d'un système (1) selon l'une quelconque des revendications précédentes,
comprenant les étapes de procédé suivantes :
a) stockage ou stockage temporaire des objets (2) en particulier individuellement dans des récipients de stockage (3) ;
b) assemblage de plusieurs objets (2) pour un ordre de travail (4) ;
c) transfert des objets (2) pour l'ordre de travail (4) des récipients de stockage (3) dans une caisse de transport (50) ;
d) retour des récipients de stockage (3) et chargement avec de nouveaux objets (2) pour le stockage ou le stockage temporaire selon l'étape a),
**caractérisé**
**en ce que** les objets (2) d'un ordre de travail (4) sont déposés sur des positions définies et/ou des emplacements de dépôt (50a) définis dans la caisse de transport (50) respective.

12. Procédé selon la revendication 11, **caractérisé en ce qu'**à l'étape b), l'assemblage des objets (2) stockés dans des récipients de stockage (3) a lieu sur une bande collectrice (16, 26, 36) et/ou un emplacement de dépôt (19, 29, 39), en déposant au moins un récipient de stockage (3) avec un objet (3) stocké reçu dans celui-ci sur la bande collectrice (16, 26, 36) et/ou l'emplacement de dépôt (19, 29, 39).

13. Procédé selon la revendication 11 ou 12, **caractérisé en ce que** la caisse de transport (50) est alimentée et/ou chargée successivement à différentes sorties de stockage (17, 27, 37) et/ou par l'intermédiaire de différentes bandes collectrices (16, 26, 36) et/ou d'appareils de manipulation (18, 28, 38) avec les objets (2) d'un ordre de travail (4).

14. Procédé selon l'une quelconque des revendications 11 à 13, **caractérisé en ce que** des caisses de transport (50) et des récipients de stockage (3) vides sont transportés davantage dans des directions opposées dans la région de sorties de stockage (17, 27, 37) et/ou d'appareils de manipulation (18, 28, 38).

15. Utilisation d'un système (1) selon l'une quelconque des revendications 1 à 10 et/ou d'un procédé selon l'une quelconque des revendications 11 à 14 pour la préparation de commandes d'objets (2) pour des ordres de travail (4) pour la fabrication de lunettes (2), au moins deux lentilles et/ou ébauches de lentilles, une monture de lunettes et/ou un outil pour le traitement de lentilles ophtalmiques étant déposé(s) dans la caisse de transport (50) pour un ordre de travail (4) au moyen d'un appareil de manipulation (18, 28, 38) et/ou de manière automatisée.
